# EUROPEAN PATENT SPECIFICATION

(11) **EP 4 285 337 B1**
(45) Date of publication and mention of the grant of the patent: **14.10.2026**
(21) Application number: 22744957.6
(22) Date of filing: 25.01.2022
(51) Int. Cl.: G06V 10/74, G06N 3/08, G06V 10/82, G06V 10/764, G07C 3/14

(54) **SYSTEM AND METHOD FOR MANUFACTURING QUALITY CONTROL USING AUTOMATED VISUAL INSPECTION**
SYSTEM UND VERFAHREN ZUR HERSTELLUNG EINER QUALITÄTSKONTROLLE MITTELS AUTOMATISIERTER VISUELLER INSPEKTION
SYSTÈME ET PROCÉDÉ DE CONTRÔLE QUALITÉ DE FABRICATION UTILISANT UNE INSPECTION VISUELLE AUTOMATISÉE

(30) Priority: 26.01.2021 US 202163141643 P
(43) Date of publication of application: 06.12.2023
(73) Proprietor: Musashi AI North America Inc., Waterloo ON N2V 1Y8 (CA)
(72) Inventor: BAKHSHMAND, Saeed, Waterloo, Ontario N2V 1Y8 (CA); BUFI, Martin, Waterloo, Ontario N2V 1Y8 (CA)
(74) Representative: Humphrey-Evans, Edward John
(86) International application number: PCT/CA2022/050100
(87) International publication number: WO 2022/160040

(56) References cited:
- US-A1- 2017 147 905
- US-A1- 2018 293 721
- US-A1- 2018 293 721
- US-A1- 2020 134 800
- "FRONTIERS IN ARTIFICIAL INTELLIGENCE AND APPLICATIONS", 1 January 2020, IOS, AMSTERDAM, NL, ISSN: 0922-6389, article CASADO-GARCÍA ÁNGELA ET AL: "Ensemble Methods for Object Detection", XP093261042, DOI: 10.3233/FAIA200407
- LI YU-TING ET AL: "Automatic Industry PCB Board DIP Process Defect Detection System Based on Deep Ensemble Self-Adaption Method", IEEE TRANSACTIONS ON COMPONENTS, PACKAGING AND MANUFACTURING TECHNOLOGY, IEEE, USA, vol. 11, no. 2, 24 December 2020 (2020-12-24), pages 312 - 323, XP011837931, ISSN: 2156-3950, [retrieved on 20210216], DOI: 10.1109/TCPMT.2020.3047089

## Description

### Technical Field

The following relates generally to manufacturing quality control, and more particularly to systems and methods for automated visual inspection of a manufactured article using artificial intelligence.

### Introduction

Manufacturing quality control is an important part of product manufacturing. Defective products can be costly. Discovering defective products at an appropriate stage of the process can be an important step for businesses to prevent the sale and use of defective articles and to determine root causes associated with the defects so that such causes can be remedied.

One way to ensure manufacturing quality control is through visual inspection of articles. For example, articles can be inspected after manufacturing to identify defects. Defective articles can be discarded, and non-defective articles can progress to the next stage of production. Properly classifying inspected articles as defective or non-defective (i.e. avoid false positives or false negatives) can be critical to controlling costs, increasing efficiency, and limiting liability.

Visual inspection can be an important part of product manufacturing. Existing visual inspection solutions may be difficult to implement in manufacturing and other similar settings where space is limited. Hardware requirements can increase cost and complexity of operations.

Visual inspection techniques include manual and automated visual inspection techniques. Manual visual inspection techniques utilize humans in performing the visual inspection, such as by physically picking up the article and examining it using a magnifying tool or the like. Human visual inspection techniques may be limited in accuracy and speed. Human inspection may be prone to missing defects. Further, human inspection may include the process of manually documenting visual inspection including documenting identified defects and related information. Such documentation processes can further slow inspection. US2018293721 (KLA TENCOR CORP) teaches of methods and systems for detecting defects in patterns formed on a specimen are provided, including one or more components executed by one or more computer subsystems, and the components include first and second learning based models. But is quiet in relation to artifact location data matches.

Automated visual inspection techniques, such as using computer vision and artificial intelligence, present an opportunity to perform visual inspection tasks at increased speed and with increased accuracy. Such techniques have limitations, however. For example, existing automated visual inspection techniques can be prone to detecting false positives (e.g. detecting defects that are not present) and false negatives (e.g. not detecting defects that are present). Further, automated visual inspection techniques are not typically well suited to deal with imperfections on inspected articles that either do not rise to the level of defect required to classify the article as defective or are not defects at all and should not trigger a system response as if the article is defective (i.e. an anomaly). One example of the latter is that manufactured articles can get dirty during processing and accumulate matter on the article surface which may trigger an erroneous defect detection.

It is thus desired to provide an automated visual inspection solution that combines traditional benefits of automated visual inspection techniques such as speed and accuracy while also providing improved capabilities such as reducing false positives or false negatives, detecting defects and anomalies, verifying automated defect detections (e.g. double checking results), and identifying new defect types.

Accordingly, there is a need for an improved system and method for automated visual inspection that overcomes at least some of the disadvantages of existing systems and methods.

### Summary

A method of automated visual inspection of an article is provided. The method, or certain steps thereof, may be executed on one or more processors. In particular, the method provides an automated visual inspection image of the article as input to an object detection model to generate object location data in accordance with claim 1.

The method may further include confirming the detected object as a defect if the artifact location data matches the object location data. The method may further include displaying the detected artifact via a user interface if the artifact location data does not match the object location data, wherein the user interface is configured to receive input data from a user indicating whether the detected artifact is an anomalous defect or an anomaly. The method may further include receiving input data from the user indicating the detected artifact is an anomalous defect and tagging the inspection image as an object detection training sample. The method may further include initiating a retraining of the object detection model using the object detection training sample.

The golden sample image may be a reference image representing a clean image of the article. The method may further include generating the golden sample image from the inspection image using a generative machine learning model. The method may further include generating a first defect class label for the detected object using the object detection model, providing at least a portion on the inspection image containing the detected object as input to a classification model, generating a second defect class label for the detected object using the classification model, and confirming the first defect class label if the first defect class label matches the second defect class label.

Comparing the inspection image to the golden sample image may include comparing an inspection image feature map of the inspection image to a golden sample feature map of the golden sample image. The method may further include generating the inspection image feature map using a first convolutional neural network ("CNN") and generating the golden sample image feature map using a second CNN.

A computer system for automated visual inspection of an article is also provided. In accordance with a second aspect of the invention, there is provided a system for automated visual inspection of an article as claimed in claim 7.

The at least one processor may be further configured to confirm the detected object as a defect if the artifact location data matches the object location data. The at least one processor may be further configured to display the detected artifact via a user interface if the artifact location data does not match the object location data, wherein the user interface is configured to receive input data from a user indicating whether the detected artifact is an anomalous defect or an anomaly. The at least one processor may be further configured to receive input data from the user indicating the detected feature is an undetected defect and tag the inspection image as an object detection training sample. The at least one processor may be further configured to initiate a retraining of the object detection model using the object detection training sample.

The golden sample image may be a reference image representing a clean image of the article. The at least one processor may be further configured to generate the golden sample image from the inspection image using a generative machine learning model. The at least one processor may be further configured to generate a first defect class label for the detected object using the object detection model, provide at least a portion on the inspection image containing the detected object as input to a classification model, generate a second defect class label for the detected object using the classification model, and confirm the first defect class label if the first defect class label matches the second defect class label.

A method of verifying a data output from a machine learning model is also provided. The method is executed on one or more processors. The method includes providing image data as input to each of a first machine learning model and a second machine learning model, wherein the first machine learning model has a first set of model parameters and the second machine learning model has a second set of model parameters, the first and second sets of model parameters being different. The method further includes detecting a first object in the image data using the first machine learning model, the detected first object including first object attribute data defining an attribute of the first object. The method further includes detecting a second object in the image data using the second machine learning model, the detected second object including second object attribute data defining the attribute of the second object. The method further includes assigning a confirmed status to the first object if the first object attribute data matches the second object attribute data according to predetermined match criteria. The method further includes assigning an unconfirmed status to the first object if the first object attribute data does not match the second object attribute data according to the predetermined match criteria.

The attribute may be an object location, and the first object attribute data and the second object attribute data may comprise location data indicating a location of the respective first or second object in the image data. The first and second machine learning models may each comprise a neural network. The neural network may be a convolutional neural network.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of an Al visual inspection system, according to an embodiment;
Figure 2 is a block diagram of a computing device of the present disclosure, according to an embodiment;
Figure 3 is a block diagram of an Al visual inspection system, according to an embodiment;
Figure 4 is a block diagram of an Al visual inspection system having a cluster architecture, according to an embodiment;
Figure 5 is a block diagram of an anomaly detection pipeline for Al visual inspection, according to an embodiment;
Figure 6A is a block diagram of a two-stage object detection model for Al visual inspection, according to an embodiment;
Figure 6B is a block diagram of a two-stage object detection model for Al visual inspection of a camshaft, according to an embodiment;
Figure 7A is a block diagram of a one-stage object detection model for Al visual inspection, according to an embodiment;
Figure 7B is a block diagram of a one-stage object detection model for Al visual inspection of a camshaft, according to an embodiment;
Figure 8 is a diagram illustrating a comparison of performance characteristics of two defect classification models, according to embodiments;
Figure 9A is a graphical representation of a generative model component of a golden sample module using an autoencoder architecture, according to an embodiment;
Figure 9B is a graphical representation of a generative model component of a golden sample module using an autoencoder architecture, according to an embodiment;
Figure 10 is a flow diagram of a golden sample pipeline using a generative model, according to an embodiment;
Figure 11 is a graph illustrating unsupervised and semi-supervised learning techniques used by a golden sample module, according to an embodiment;
Figure 12 shows illustrations of example images generated by the visual inspection system of the present disclosure and used by a golden sample component, according to embodiments;
Figure 13 shows illustrations of example input inspection images and resulting golden sample images using a generative golden sample process, according to an embodiment;
Figure 14 shows illustrations of example golden sample images according to non-generative golden sample and generative golden sample processes, according to embodiments;
Figure 15 is a flow diagram of an anomaly detection pipeline for camshaft visual inspection, according to an embodiment;
Figure 16 is a flow diagram of an anomaly detection pipeline for camshaft visual inspection, according to an embodiment;
Figure 17 is a graphical representation of performance characteristics for a plurality of anomaly detection algorithms, according to embodiments;
Figure 18 is a block diagram of a computer system for object tracking, according to an embodiment;
Figure 19 is an example code representation of the object tracker of Figure 18, according to an embodiment;
Figure 20 is a flow diagram of a method of object tracking, according to an embodiment;
Figures 21A to 21D are illustrations of example user interfaces displaying annotated inspection images processed using object tracking, according to an embodiment;
Figure 22 is a block diagram of an automated visual inspection pipeline, according to an embodiment; and
Figure 23 is a flow diagram of an automated visual inspection pipeline for camshaft visual inspection, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device. Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention. Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously. When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

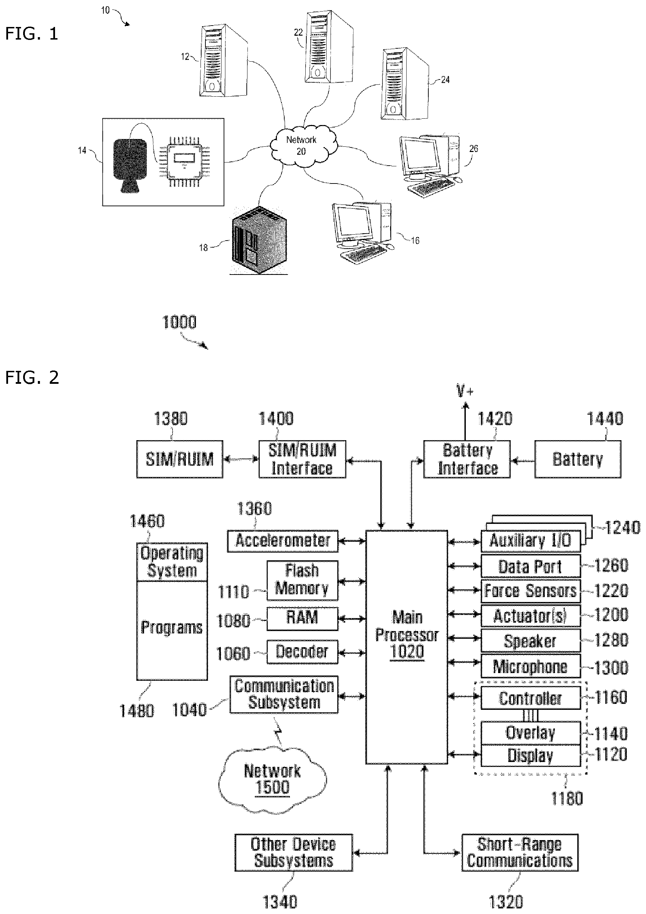

Referring now to Figure 1, shown therein is a block diagram illustrating a visual inspection system 10, in accordance with an embodiment. The system 10 includes an Al visual inspection device 12, which communicates with a camera device 14, an operator device 16, a programmable logic controller ("PLC") device 18, and an analytics server 22 via a network 20. The system 10 also includes an object detection database server 24, which can access and/or store object detection training data for training the Al visual inspection device 12. The system 10 also includes an analytics client device 26 which communicates with the analytics server 22 and which may be part of or separate from the operator device 16. Devices 24 and 26 are also communicatively connected to one or more other devices 12, 14, 16, 18, 22, 24, 26 via the network 20.

The devices 12, 14, 16, 18, 22, 24, 26 may be a server computer, node computing device (e.g. JETSON computing device or the like), embedded device, desktop computer, notebook computer, tablet, PDA, smartphone, or another computing device. The devices 12, 14, 16, 18, 22, 24, 26 may include a connection with the network 20 such as a wired or wireless connection to the Internet. In some cases, the network 20 may include other types of computer or telecommunication networks. The devices 12, 14, 16, 18, 22, 24, 26 may include one or more of a memory, a secondary storage device, a processor, an input device, a display device, and an output device. Memory may include random access memory (RAM) or similar types of memory. Also, memory may store one or more applications for execution by processor. Applications may correspond with software modules comprising computer executable instructions to perform processing for the functions described below. Secondary storage device may include a hard disk drive, floppy disk drive, CD drive, DVD drive, Blu-ray drive, or other types of non-volatile data storage. Processor may execute applications, computer readable instructions or programs. The applications, computer readable instructions or programs may be stored in memory or in secondary storage or may be received from the Internet or other network 20.

Input device may include any device for entering information into device 12, 14, 16, 18, 22, 24, 26. For example, input device may be a keyboard, keypad, cursor-control device, touchscreen, camera, or microphone. Display device may include any type of device for presenting visual information. For example, display device may be a computer monitor, a flat-screen display, a projector, or a display panel. Output device may include any type of device for presenting a hard copy of information, such as a printer for example. Output device may also include other types of output devices such as speakers, for example. In some cases, device 12, 14, 16, 18, 22, 24, 26 may include multiple of any one or more of processors, applications, software modules, second storage devices, network connections, input devices, output devices, and display devices. Although devices 12, 14, 16, 18, 22, 24, 26 are described with various components, one skilled in the art will appreciate that the devices 12, 14, 16, 18, 22, 24, 26 may in some cases contain fewer, additional or different components. In addition, although aspects of an implementation of the devices 12, 14, 16, 18, 22, 24, 26 may be described as being stored in memory, one skilled in the art will appreciate that these aspects can also be stored on or read from other types of computer program products or computer-readable media, such as secondary storage devices, including hard disks, floppy disks, CDs, or DVDs; a carrier wave from the Internet or other network; or other forms of RAM or ROM. The computer-readable media may include instructions for controlling the devices 12, 14, 16, 18, 22, 24, 26 and/or processor to perform a particular method.

Devices 12, 14, 16, 18, 22, 24, 26 can be described performing certain acts. It will be appreciated that any one or more of these devices may perform an act automatically or in response to an interaction by a user of that device. That is, the user of the device may manipulate one or more input devices (e.g. a touchscreen, a mouse, or a button) causing the device to perform the described act. In many cases, this aspect may not be described below, but it will be understood. As an example, it is described below that the devices 12, 14, 16, 18, 22, 24, 26 may send information to one or more other device 12, 14, 16, 18, 22, 24, 26. For example, a user using the operator device 16 may manipulate one or more inputs (e.g. a mouse and a keyboard) to interact with a user interface displayed on a display of the device 16. Generally, the device may receive a user interface from the network 20 (e.g. in the form of a webpage). Alternatively, or in addition, a user interface may be stored locally at a device (e.g. a cache of a webpage or a mobile application).

The devices 12, 14, 16, 18, 22, 24, 26 may be configured to receive a plurality of information, from one or more of the plurality of devices 12, 14, 16, 18, 22, 24, 26. In response to receiving information, the respective device 12, 14, 16, 18, 22, 24, 26 may store the information in storage database. The storage may correspond with secondary storage of one or more other devices 12, 14, 16, 18, 22, 24, 26. Generally, the storage database may be any suitable storage device such as a hard disk drive, a solid-state drive, a memory card, or a disk (e.g. CD, DVD, or Blu-ray etc.). Also, the storage database may be locally connected with the device 12, 14, 16, 18, 22, 24, 26. In some cases, storage database may be located remotely from the device 12, 14, 16, 18, 22, 24, 26 and accessible to the device 12, 14, 16, 18, 22, 24, 26 across a network for example. In some cases, storage database may comprise one or more storage devices located at a networked cloud storage provider.

The Al visual inspection device 12 may be a purpose-built machine designed specifically for performing object (e.g. defect) detection tasks, object (e.g. defect) classification tasks, golden sample analysis tasks, object (e.g. defect) tracking tasks, and other related data processing tasks using an inspection image captured by the camera device 14.

The analytics server 24 may be a purpose-built device designed specifically for receiving, processing, storing, and analyzing output data from the object detection tasks, defect classification tasks, golden sample analysis tasks, object tracking, or other related data processing tasks performed by the Al visual inspection device 12. The analytics server 24 may include or be in communication with an analytics database which stores various data received from one or more of the devices 12, 14, 16, 18, 22, 24, 26, such as the Al visual inspection device 12 and data generated by the analytics server 24 using the data received from the one or more devices.

Referring now to Figure 2, shown therein is a simplified block diagram of components of a device 100, such as a mobile device or portable electronic device. The device 100 may be, for example, any of devices 12, 14, 16, 18, 22, 24, 26 of Figure 1. The device 100 includes multiple components such as a processor 102 that controls the operations of the device 100. Communication functions, including data communications, voice communications, or both may be performed through a communication subsystem 104. Data received by the device 100 may be decompressed and decrypted by a decoder 106. The communication subsystem 104 may receive messages from and send messages to a wireless network 150. The wireless network 150 may be any type of wireless network, including, but not limited to, data-centric wireless networks, voice-centric wireless networks, and dual-mode networks that support both voice and data communications. The device 100 may be a battery-powered device and as shown includes a battery interface 142 for receiving one or more rechargeable batteries 144.

The processor 102 also interacts with additional subsystems such as a Random Access Memory (RAM) 108, a flash memory 110, a display 112 (e.g. with a touch-sensitive overlay 114 connected to an electronic controller 116 that together comprise a touch-sensitive display 118), an actuator assembly 120, one or more optional force sensors 122, an auxiliary input/output (I/O) subsystem 124, a data port 126, a speaker 128, a microphone 130, short-range communications systems 132 and other device subsystems 134. In some embodiments, user-interaction with the graphical user interface may be performed through the touch-sensitive overlay 114. The processor 102 may interact with the touch-sensitive overlay 114 via the electronic controller 116. Information, such as text, characters, symbols, images, icons, and other items that may be displayed or rendered on a portable electronic device generated by the processor 102 may be displayed on the touch-sensitive display 118. The processor 102 may also interact with an accelerometer 136 as shown in Figure 1. The accelerometer 136 may be utilized for detecting direction of gravitational forces or gravity-induced reaction forces.

To identify a subscriber for network access according to the present embodiment, the device 100 may use a Subscriber Identity Module or a Removable User Identity Module (SIM/RUIM) card 138 inserted into a SIM/RUIM interface 140 for communication with a network (such as the wireless network 150). Alternatively, user identification information may be programmed into the flash memory 110 or performed using other techniques.

The device 100 also includes an operating system 146 and software components 148 that are executed by the processor 102 and which may be stored in a persistent data storage device such as the flash memory 110. Additional applications may be loaded onto the device 100 through the wireless network 150, the auxiliary I/O subsystem 124, the data port 126, the short-range communications subsystem 132, or any other suitable device subsystem 134. For example, in use, a received signal such as a text message, an e-mail message, web page download, or other data may be processed by the communication subsystem 104 and input to the processor 102. The processor 102 then processes the received signal for output to the display 112 or alternatively to the auxiliary I/O subsystem 124. A subscriber may also compose data items, such as e-mail messages, for example, which may be transmitted over the wireless network 150 through the communication subsystem 104. For voice communications, the overall operation of the portable electronic device 100 may be similar. The speaker 128 may output audible information converted from electrical signals, and the microphone 130 may convert audible information into electrical signals for processing.

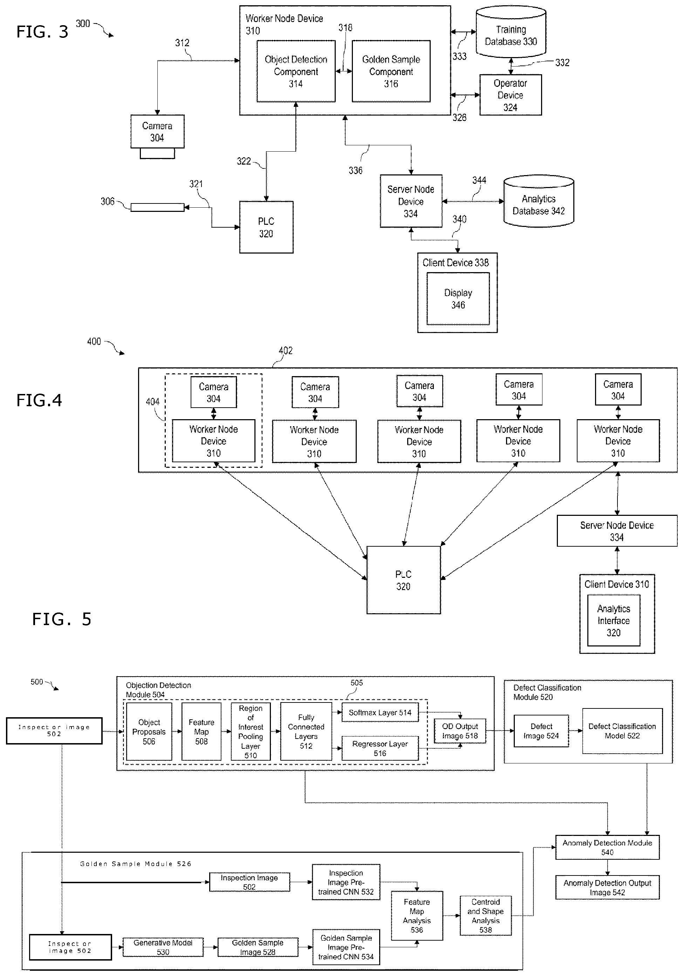

Referring now to Figure 3, shown therein is an automated visual inspection system 300, according to an embodiment. The system 300 can be used to visually inspect a target article. The visual inspection may include defect detection and classification and anomaly detection. Figure 3 illustrates an example architecture of hardware components for the visual inspection system 300. The system 300 includes a camera 304. The camera 304 captures image data of a target article 306. The image data may include a single image or a plurality of images. The plurality of images (frames) may be captured by the camera 304 as a video. To image an area of the target article 306, the camera 304 and the target article 306 may move relative to one another. For example, the target article 306 may be rotated and a plurality of images captured by the camera 304 at different positions on the target article 306 to provide adequate inspection from multiple angles. The camera 304 may be configured to capture a plurality of frames, wherein each frame is taken at a respective target article position (e.g. if the target article 306 is rotating relative to the camera 304). The camera 304 may be a USB 3.0 camera or an internet protocol ("IP") camera. The target article 306 may be any physical article on which a user of the system 300 desires to perform visual inspection. The target article 306 may be a manufactured or machined article. The target article 306 may have a curved surface. The target article 306 may be shaped such that the target article 306 needs to be rotated relative to the camera 304 for the surface of the target article 306 to be inspected. In a particular case, the target article 306 may be a camshaft.

The target article 306 may have various physical properties and characteristics which present challenges in performing visual inspection tasks and which the system 300 is configured to manage. For example, the target article 306 may have different surface finishes. The target article 306 may cause lighting refraction (e.g. under inspection conditions). The target article 306 may have variation of defect tolerance per location on the target article 306. The target article 306 may be a complex article (e.g. having a complex shape or structure) which may affect lighting and cycle time for visual inspection. The target article 306 may be prone to variation of defect characteristics. The target article 306 may have non-symmetrical properties. The non-symmetrical properties which may affect focal distance with respect to camera position and may thus require more advanced robotic manipulation to acquire proper imaging of the target article 306.

The target article 306 may be a cylindrical metal object having variable lengths. The target article 306 may have a machined surface having a certain tolerance for the texture and size of defects. The target article 306 may be an article that can be clean or covered (completely or partially) with transparent or semi-translucent materials (liquids) at time of visual inspection. The appearance of the defects may be predetermined or have been collected during operation of the system 300 for further training. The target article 306 may be susceptible to developing defects during the manufacturing or machining process. Defects may be characterized as unacceptable deviations from a "perfect" or "good" article. A target article 306 having a defect is considered defective, unacceptable, or "not good" ("NG"). The target article 306 may also be susceptible to developing anomalies during the manufacturing and production process. Anomalies may be characterized as deviations from the good article that are acceptable. In other words, anomalies are deviations that are not significant enough to render the part defective and thus should not trigger treatment of the target article as defective.

The system 300 inspects the article 306 and determines whether the article 306 has a defect. Articles 306 may be classified as defective or non-defective by the system 300. By identifying articles 306 as defective or non-defective, the inspected articles can be differentially treated based on the outcome of the visual inspection. Defective articles 306 may be discarded or otherwise removed from further processing. Non-defective articles 306 may continue with further processing. Generally, the article 306 is an article in which defects are undesirable. Defects in the article 306 may lead to reduced functional performance of the article 306 or of a larger article (e.g. system or machine) of which the article 306 is a component. Defects in the article 306 may reduce the visual appeal of the article. Discovering defective products can be an important step for a business to prevent the sale and use of defective articles and to determine root causes associated with the defects so that such causes can be remedied. The article 306 may be a fabricated article. The article 306 may be a manufactured article that is prone to developing defects during the manufacturing process. The article 306 may be an article which derives some value from visual appearance and on which certain defects may negatively impact the visual appearance. Defects in the article 306 may develop during manufacturing of the article 306 itself or some other process (e.g. transport, testing).

The article 306 may be composed of one or more materials, such as metal, steel, plastic, composite, wood, glass, etc. The article 306 may be uniform or non-uniform in size and shape. The article 306 may have a curved outer surface. The article 306 may include a plurality of sections. Article sections may be further divided into article subsections. The article sections (or subsections) may be determined based on the appearance or function of the article. The article sections may be determined to facilitate better visual inspection of the article 306 and to better identify unacceptably defective articles. The article sections may correspond to different parts of the article 306 having different functions. Different sections may have similar or different dimensions. In some cases, the article 306 may include a plurality of different section types, with each section type appearing one or more times in the article 306. The sections may be regularly or irregularly shaped. Different sections may have different defect specifications (i.e. tolerance for certain defects).

The article 306 may be a stand-alone article that is intended for use on its own or may be a component of a bigger article (e.g. a machine part of a larger machine). The article 306 may be prone to multiple types or classes of defects detectable using the system 300. Example defects types may include paint, porosity, dents, scratches, sludge, etc. Defect types may vary depending on the article 306. For example, the defect types may be particular to the article 306 based on the manufacturing process or material composition of the article 306. Defects in the article 306 may be acquired during manufacturing itself or through subsequent processing of the article 306. The article 306 may be a power train part for automobiles and/or motorcycles. The power train part may be a camshaft, differential assembly, transmission gear, linkage, suspension part, or a part or component of any of the foregoing.

In a particular embodiment of system 300, the article 306 is a camshaft. Generally, a camshaft is a shaft to which a cam is fastened or of which a cam forms an integral part. The camshaft can be used as a mechanical component of an internal combustion engine. The camshaft opens and closes inlet and exhaust valves of the engine at an appropriate time and in a precisely defined sequence. The camshaft may include a plurality of different components or parts, with each different component providing a particular function and having particular dimensions. Camshaft components may include any one or more of journals, lobes, ends, and bearings. The camshaft may be divided into sections to inspect using the system 300. The sections may correspond to the different components of the camshaft (e.g. lobe section, journal section). The camshaft may have 10 to 17 sections to inspect. The 10 to 17 sections may include lobes and journals. The system 300 may be configured to acquire in the range of 1300 images per camshaft. The system 300 may acquire in the range of 50 images per section (e.g. 13 to 17 sections per camshaft). For a section, images may be acquired at every 7.2 degrees of rotation of the camshaft. This may allow for a 360-degree rotation every 2 seconds while still allowing Al processes sufficient degrees of freedom to properly track defects across the 50 images in each section. The camshaft may include a cylindrical rod running the length of the cylinder bank with a plurality of oblong lobes protruding from the rod. The number of lobes may correspond to the number of valves (e.g. one lobe for each valve). The main journals keep the camshaft in place as it spins around in the engine bay. The camshaft may be composed of any suitable camshaft material. The camshaft may be made of chilled iron casting or billet steel.

The camshaft may be prone to developing defects whether through the manufacturing process or other processing of the camshaft or its components. Defect types may include paint, porosity, sludge, or the like. Different components, or sections, of the camshaft may develop different types of defects. Defects may affect or impact different components differently. This may be the case because different components perform different functions and thus may have different tolerances for defects. For example, defects to lobes and journals may be treated differently and have different tolerances. In some cases, subsections of a component may have different specifications. For example, lobes (which are egg-shaped) may have different defect specifications based on the location of the defect on the lobe. In some cases, the camshaft may have porosity specifications as small as 0.4 mm. Porosity specifications may depend on location. As an example, see table below:

| Applicable Area | | | Pinhole, Porosity |
|---|---|---|---|
| | | | Size |
| Cam Lobe | Top | Pinhole | Ø 0.4 mm max |
| | | Porosity | No Defect |
| | Excluding Top | | Ø 1.5 mm max |
| Thrust Surface | | | Ø 2.5 mm max |
| VTC Area | | | Ø 0.4 mm max |
| Journal Surface | | | Ø 2.0 mm max |
| Area | | | Ø 2.5 mm max |

The camshaft sections may have non-uniform shapes. This may produce irregular light reflections. Occasionally, the camshaft may be covered with a rust inhibitor (clear). The camshaft may experience random occurrences of sludge or dark oil drops. In some cases, sludge may cover a porosity. The defects (e.g. porosity, sludge) may have different sizes and shapes. The camera 304 is communicatively connected to a worker node device 310 via a communication link 312. The worker node device 310 may be the Al visual inspection device 12 of Figure 1. The camera 304 sends the image data to the worker node device 310 via the communication link 312. In an embodiment, the camera 304 captures an image frame at the current target article position and sends the image frame to the worker node device 310.

The worker node device 310 includes an object detection component 314. The object detection component 314 is configured to perform an object detection process on the image data to detect defects (objects) in the image data. Generally, the object detection process determines whether a defect (or defects) is present in the image data or not. The object detection component 314 is further configured to perform a defect classification process to classify defect types (i.e. assign a defect class to a detected defect). Defect classification can be performed on an input provided from the object detection process. The defect classification process is invoked upon the detection of one or more defects in the image data by the object detection process. The defect classification process assigns a class label (e.g. defect name or defect type, such as "scratch") to the defects provided from the object detection process. In some cases, the object detection component 314 includes an object detection model and an object classification model. The object detection model generates an object class for each detected object. Image date including the detected object is provided to the classification model which outputs an object class. The object detection component 314 compares the object class determined by the object detection model with the object class determined by the classification model to confirm the class label for the object. In cases where the class label is not confirmed by the classification model, the object detection component 314 may be configured to disregard the detection.

The worker node device 310 also includes a golden sample component 316. The golden sample component 316 is configured to perform a golden sample analysis process on the inspection image received from the camera 304. As such, the worker node device 310 may be configured to pass the inspection image to the golden sample component 316. The golden sample analysis process includes analyzing the inspection image with reference to a golden sample image to determine differences. Differences between the inspection image and the golden sample image are identified by the golden sample component 316 and can be used in subsequent processing operations, such as to detect anomalies and identify new types or classes of defects. For example, outputs of the golden sample component 316 (identified differences, or objects) and the object detection component 314 (detected objects) may be compared. The golden sample image may be generated by the golden sample component 316. In an embodiment, the golden sample image is generated from the inspection image. The object detection component 314 and the golden sample component 316 may be communicatively connected via a communication link 318. The communication link 318 may include an application programming interface (API) or the like. The object detection component 314 and the golden sample component 316 may each have their own designated hardware component. For example, the object detection component 314 may run on a first embedded device and the golden sample component 316 may run on a second embedded device. The embedded device may be an embedded device specially configured for performing artificial intelligence-type tasks. In an embodiment, the embedded device is a JETSON box.

The system 300 also includes a PLC device 320. The PLC device 320 is communicatively connected to the worker node device 310 via a communication link 322. The PLC device 320 is configured to control the manipulation and physical processing of the target article 306. This may be done by sending and receiving control instructions to an article manipulating unit (not shown) via communication link 321. Such manipulation and physical processing may include rotating or otherwise moving the target article 306 for imaging and loading and unloading target articles 306 to and from an inspection area. An example instruction sent by the PLC 320 to the article manipulating unit via the communication link 321 may be "rotate target article by 'n' degrees". In some cases, the transmission of such instruction may be dependent upon information received from the worker node device 310 (e.g. the object detection component 314). The PLC 320 may store defect tolerance data. The defect tolerance data may include a defect class identifier unique to a particular defect class and one or more tolerance values linked to the defect class identifier. In other embodiments, the defect tolerance data may be stored on another device, such as the worker node device 310. The defect tolerance data may be stored in a defect tolerance database. Defect tolerance data in the defect tolerance database may be reference using the defect class identifier to facilitate retrieval of tolerance data values for comparison to data generated by the worker node device 310 (e.g. via components 314, 316).

For example, in an embodiment, the PLC 320 is configured to receive data from the worker node device 310 via the communication link 322 indicating the outcome of the defect detection process. For example, in cases where a defect has been detected by the object detection component 314, defect data may be sent to the PLC 320. The PLC 320 stores the defect tolerance data. The PLC 320 analyzes the defect data in view of the tolerance data to determine if the target article 306 is defective (e.g. "NG") or within tolerance (e.g. "OK"). The PLC 320 may send a signal to the worker node device 310 indicating the outcome of the tolerance analysis. Where the PLC 320 determines the defect data is out of tolerance, the PLC 320 may stop the inspection of the target article 306 and initiate a process for the removal of the defective target article and loading of a new target article. The PLC 320 may generate a control signal for stopping inspection of the target article and transmit the control signal to an actuator responsible for manipulating the target article 306.

In cases where the object detection component 314 has not detected a defect in the inspection image, the worker node device 310 (e.g. via the object detection component 314) sends a signal to the PLC 320 indicating the outcome of the object detection process which indicates no defects were found in the image (i.e. "OK"). Upon receiving the OK message, the PLC 320 sends a control signal to an actuator or manipulator of the target article 306 to adjust the current inspection position of the target article 306 (e.g. rotate the target article 306 X degrees). In other embodiments, the defect tolerance data may be stored at the worker node device 310 and the tolerance analysis performed by the worker node device 310. The worker node device 310 may then send a signal to the PLC 320 indicating whether the target article is defective or not.

The system 300 also includes an operator device 324. The operator device 324 is communicatively connected to the worker node device 310 via a communication link 326. The operator device 324 includes a user interface component (or module) (e.g. a human-machine interface). The operator device 324 receives data from the worker node device 310 via the communication link 326. The received data may include output data from the object detection component 314 and the golden sample component 316 of the worker node device 310. For example, the output data may include an annotated inspection image including artifact data. The artifact data may include location information (e.g. coordinates, bounding box) and label information such that artifacts (e.g. defects, anomalies) in the inspection image that were identified by the worker node device 310 can be identified visually in a displayed image.

The worker node device 310 or the operator device 324 may include automatic image annotation software for automatically assigning metadata comprising data generated by the components 314, 316 to a digital inspection image. The operator device 324 provides the output data from the worker node device 310 to the user interface component which generates a user interface screen displaying the annotated inspection image. For example, the inspection image may be annotated with metadata comprising defect data generated by the components such as defect location information (e.g. bounding box coordinates, centroid coordinates), defect size data, and defect class information.

The user interface component of the operator device 324 may also render one or more user interface elements for receiving input from the operator. For example, the user interface component may provide a yes/no or similar binary option for receiving user input data indicating a selection of an option. In a particular case, the user interface may present and highlight a particular object detected by the worker node device 310 in an annotated inspection image and ask whether the object is an anomaly or not (and receive a corresponding input from the user). Depending on the input data received from the user, the annotated inspection image (or a portion thereof), may be routed differently in the system 300. For example, upon the user interface component of the operator device 324 receiving certain input data (e.g. an answer "no" to a question of whether a given artifact is an anomaly, such as by clicking on a user interface element labelled "no"), the operator device 324 or the worker node device 310 may be configured to send the annotated inspection image (or a subset of the image data) to an object detection training database 330 via communication link 332 or 333, respectively. The data received by the object detection training database 330 can be logged as a training sample for a future training dataset that can be used to further train on or more artificial intelligence components of the worker node device 310.

The system 300 also includes a server node device 334. The server node device 334 is communicatively connected to the worker node device 310 via a communication link 336. In particular, the server node device is in communication with the object detection component 314 of the worker node device 310 via the communication link 336. The server node device 334 may include a Jetson device or the like. The server node device 334 receives visual inspection data from the worker node device 310. The visual inspection data includes output data (or "defect data") from the object detection component 314. The defect data may include whether a defect was found or not found, a unique defect identifier for each detected defect, a number of defects found, whether a target article is defective or not defective, location of defect (defect location data, such as bounding box coordinates), a defect class identifier, or the like. The server node device 334 includes a visual inspection analytics component configured to analyze the received defect data. The server node device 334 is communicatively connected to a client device 338 via a communication link 340. In some cases, the client device 338 may include the server node device 334 (i.e. the server node device is a component of the client device). The server node device 334 is also communicatively connected to an analytics database 342 via a communication link 344. The analytics database 342 stores analytics data as well as visual inspection output data from the worker node device 310 (e.g. defect data). The defect data may be stored such that a database record is generated and maintained for each inspected target article 306. The record may include a target article identifier, which may be captured from the target article itself (e.g. a code on the article captured by the camera) or automatically generated by the server node device 334. Various defect data may be associated with or linked to the database record for the target article 306. Each defect may be assigned a unique identifier to which other data about the defect can be linked.

The analytics data may be generated by the server node device 334 from the visual inspection data. The analytics data may be generated by the application of statistical analysis techniques to the visual inspection data. The analytics data may provide insight to an operator or other user as to the determinations made by the system 300 across a number of target articles 306. The client device 338 includes a user interface component configured to provide a graphical user interface via a display 346. The user interface component receives analytics data from the server node device 334 and displays the analytics data via the graphical user interface on the display 346. In some cases, the server node device 334 and the user interface component are configured to update the graphical user interface in real-time upon the server node device 334 receiving visual inspection data from the worker node device 310.

Referring now to Figure 4, shown therein is a visual inspection system 400, according to another embodiment. The visual inspection system 400 has a cluster architecture. Where components of system 400 are assigned 300 series reference numerals, such components function similarly to the similarly numbered components as described in reference to Figure 3. The visual inspection system 400 includes a cluster 402. The cluster 402 includes a plurality of cluster units 404. Each cluster unit 404 includes a camera 304 and a worker node device 310. The camera 304 and worker node device 310 are communicatively connected via communication link 312 as in system 300 of Figure 3. Each worker node device 310 in the cluster 402 is communicatively connected to the same PLC device 320 via communication link 322. In an embodiment, the system 400 is configured such that there is one PLC device 320 communicating with 2-16 worker node devices 310. The system 400 includes a server node device 334. Each worker node device 310 is connected to the server node device 334 to provide real-time streaming data. The server node device 334 is communicatively connected to a client device 338 including display 346.

The cluster architecture of the system 400 may provide certain advantages. The cluster architecture may allow for managing sets of devices 310. It may also allow a user to conduct operations with minimal or zero downtime since all parts are interchangeable if one edge device (i.e. worker node device 310) breaks. Additionally, the cluster architecture facilitates management of groups of devices in clusters, making scaling up a visual inspection system offering easier.

Referring now to Figure 5, shown therein is a visual inspection pipeline 500, according to an embodiment. The pipeline 500 is implemented by one or more computing devices, such as the worker node device 310 of Figure 3. The pipeline 500 performs defect detection and classification and anomaly detection. The pipeline 500 includes an inspection image 502. The inspection image 502 comprises image data of a target article, such as target article 306 of Figure 3, captured by a camera device (e.g. camera device 304 of Figure 3). The inspection image 502 may be a single frame captured by the camera device 304. Generally, the pipeline 500 may be configured to receive a plurality of inspection images 502 for a given target article 306. In some embodiments, however, a single inspection image 502 may be sufficient. The inspection image 502 may be received from the camera device 304 via the communication link 312 and may be received in real-time as images are captured.

The inspection image 502 is provided to an object detection module 504. The object detection module 504 includes an object detection model for performing object detection tasks. The object detection model performs computer vision and image processing for detecting instances of semantic objects of a certain class in a digital image (inspection image). Generally, the object detection module 504 receives the inspection image as input, passes the inspection image through the object detection model (e.g. CNN), and generates object detection (OD) output data. The OD output data may be in the form of an annotated inspection image including metadata describing objects detected in the inspection image 502. The object detection model is trained and configured to find defects in the inspection image 502. The object detection model may also act as a classifier having one class for all defect types. Images 502 including one or more defects may be labelled as "NG". Images with no detected defects may be labelled "OK". The object detection model may be configured to output an object class, an object location (e.g. bounding box coordinates), and a confidence score for each detected object. For example, for each detected object the object detection model may return an array of four numbers representing a bounding box (location data) that surrounds the detected object's position (e.g. [top, left, bottom, right]). The top value represents the distance of the rectangle's top edge from the top of the image, in pixels. The left value represents the left edge's distance from the left of the input image. The other values (bottom and right) represent the bottom and right edges in a similar manner.

Inspection images 502 labelled as OK are not passed to a defect classifier (e.g. defect classification module 520). Inspection images 502 labelled as NG include one or more defects that have been identified by the object detection model and are passed to a defect classifier (e.g. defect classification module 520). The OD output data 518 for an NG inspection image may include the inspection image data and defect data. The defect data may be stored as annotation data or metadata of the inspection image 502.

The defect data may include a list of detected defects. The list of detected defects may include data about each defect detected by the object detector model (e.g. class label, location data such as bounding box coordinates). The defect data may include a list of one or more bounding boxes corresponding to one or more defects detected by the object detector model. Each bounding box represents an area of the inspection image defined by x and y coordinates which encloses the defect as detected by the object detector model. In an embodiment, the defect data includes defect location data (e.g. bounding box coordinates) and a defect class label for each detected defect.

The defect data may also include a defect count (i.e. number of defects detected) for the inspection image 502. The defect data may also include a defect identifier assigned to the detected defect. It is worthwhile to note that in some embodiments the defects detected by the objection detection model are "candidate defects". This may be the case, for example, where the defect classifier includes an OK class representing defects detected by the object detector model that are not assigned to a defect class. In other words, it is possible that a defect detected by the object detection module 504 will be later determined and identified by another component of the system (e.g. defect classifier 520, anomaly detector module 540) as not a defect. In instances where the object detection module 504 has detected no defects in the inspection image 502, the object detection module 504 may generate an OK signal or message for the inspection image 502. The OK signal may be sent to one or more components of the system, such as PLC 320. In an embodiment, the object detection module 504 can perform objection detection on a 800pi x 600pi inspection image in 40ms.

In Figure 5, the object detection model is a convolutional neural network (CNN) 505. In other embodiments, the objection detection model may be any suitable object detector implementing machine learning, deep learning, or computer vision techniques. The CNN 505 includes a plurality of components or layers. The CNN components include an object proposals component 506, a feature map component 508, an region of interest (Rol) pooling component 510, a fully connected layers component 512, a softmax component 514, and a regressor component 516. The softmax component 514 provides a class label output for each object detected in the image 502. The regressor component 516 provides final bounding box coordinates for each object detected in the image 502. The bounding box coordinates define the target location (i.e. the detected object). The bounding box is a rectangular box which may be determined by the x- and y-axis coordinates in the upper-left corner and the x- and y-axis coordinates in lower-right corner of the rectangle. The class label and final bounding box coordinate outputs may be combined into an object detection output by the object detection module 504. The object detection output may include a confidence score (e.g. between 0 and 1).

The object detection module 504 may be further configured to crop or otherwise isolate a subset of the inspection image 502 to isolate regions of interest in the inspection image 502 containing a detected defect. The object detection module 504 may using an image cropping function or the like to generate the subset of the inspection image data corresponding to the defect region. The cropping function may be configured to receive the bounding boxes and inspection image 502 from the object detection module 504 and crop a portion of the inspection image 502 (subset of the image data) corresponding to the bounding box. As a result, the cropping function generates a defect image 524 which is a subset or portion of the inspection image. The defect image 524 may be created in or converted to a pixel resolution that is different from the pixel resolution of the inspection image inputted to the object detection module 504. In an embodiment, the defect image 524 is in the range of 200pi x 200pi. The object detection module 504 may generate a 200pi x 200pi defect image from an 800pi x 600pi inspection image 502.

Where a plurality of defects have been detected in the inspection image 502, the object detection module 504 performs the cropping function to generate a defect image 502 for each detected defect (e.g. region of interest defined by bounding box). The annotated inspection image 518 generated by the objection detection module 504 is passed to a defect classification module 520. This may include generating one or more defect images 524 from the annotated inspection image 518 and passing the defect images 524 to the defect classification module 520. The defect classification module includes a defect classification model 522. The defect classification model 522 may be a neural network. The classification model 522 in pipeline 500 is a convolutional neural network. Other classification models using neural networks or other machine or deep learning techniques may be possible and are contemplated. The defect classification model 522 may be trained using training data comprising labelled defect images.

The defect classification module 520 is configured to analyze a defect image 524 using a trained defect classification model 522 and generate a class label or assignment for the defect image 524. The defect image 524 may be a cropped defect image. The defect classification model 522 includes an output layer comprising a plurality of output nodes. Each output node in the output layer corresponds to a defect class associated with a defect type. For example, in a camshaft visual inspection example, defect classes may include any one or more of porosity, dent, scratch, rolled-in scale, patches, crazing, pitted surface, and inclusion. In some cases, a certain defect type may have multiple classes (i.e. sub-classes of a larger class), such as where different subtypes of the defect are possible and it is not useful or efficient to generalize the defect classifier to classify the subtypes under the same class. One such example may be where there are different classes for different types of porosity defects. The classification model 522 also includes an output node corresponding to a no defect or OK class. The defect classification model 522 may be configured to generate a probability distribution of class assignment using, for example, an activation function (e.g. softmax) or the like. The activation function may output a vector that represents the probability distributions of a list of potential outcomes (i.e. that the defect belongs to a particular class). The defect classification module 520 is configured to assign a class label to a particular defect image based on the output of the activation function. For example, the defect classification module 520 may assign the class label having the highest probability score. In some cases, the defect classification module 520 may set a probability threshold which must be met in order for a given class assignment to be made. In some cases, the defect classification module 520 may assign a defect class label and include a confidence/probability level.

The output of the defect classification module 520 includes a defect class that is linked to the defect image 524. In cases where the object detection module 504 has assigned each defect detected in the inspection image 502 a unique defect ID and stored defect data linked to the defect ID, the class assignment may be linked to and stored with the defect ID in a similar manner. The defect classification output may be used by the object detection module 504 to confirm a defect class label for a detected object (e.g. by comparing class labels).

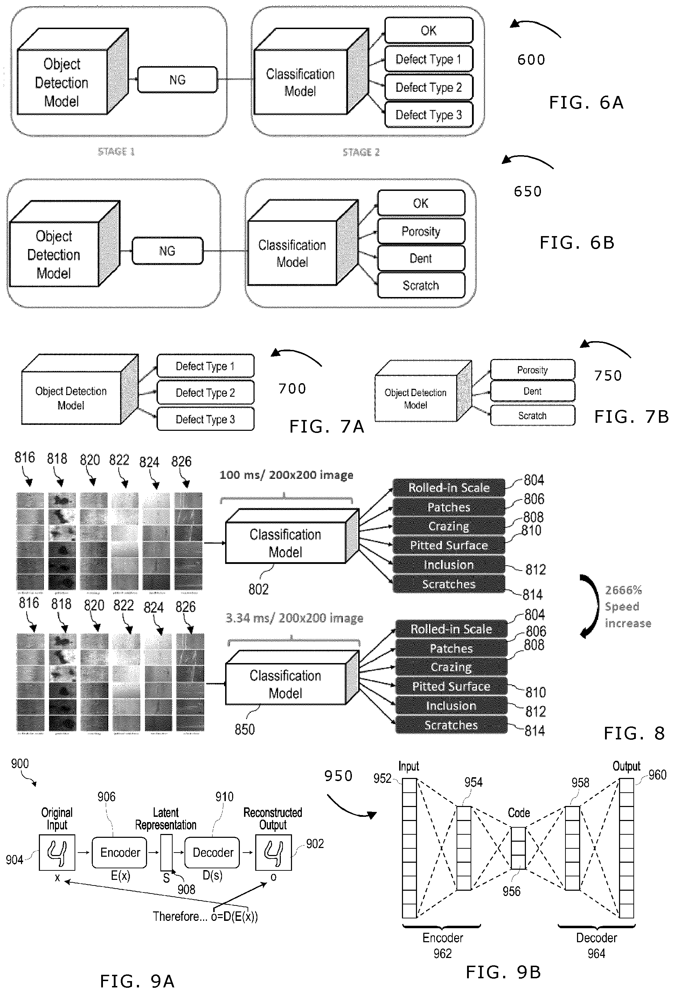

The objection detection module 504 and defect classification module 520 of Figure 5 represent a two-stage object detection model of the visual inspection system 300. A representation of the two-stage object detection model is shown in Figures 6A and 6B, according to an embodiment. Figure 6A shows a generic two-stage object detection model 600. Figure 6B shows a two-stage object detection model 650 of a camshaft visual inspection implementation. In the case of both models 600, 650, the first stage of the two-stage object detection model includes object detection (defect detection), which is performed by the object detection module 504. The second stage of the two-stage object detection model 600, 650 includes defect classification, which is performed by the defect classification module 520 using the output 518 of the object detection module 504. In other embodiments, the object detection module 504 may implement a one-stage object detection model.

A representation of a one-stage model is shown in Figures 7A and 7B. Figure 7A shows a generic one-stage object detection model 700 for visual inspection. Figure 7B shows a one-stage object detection model 750 of a camshaft visual inspection implementation. In the case of each model 700, 750, the one-stage object detection model performs object detection and defect classification using a single model. In such cases, the object detection model 700, 750 is configured to perform defect classification functions of the defect classification module (i.e. the functions of the defect classification module are implemented as part of the object detection module).

The two-stage object detection model 600, 650 may provide various advantages, such as improving the detection of defects (via the object detection model) and improving the classification of detected defects (via the defect classification model). Further, the two-stage object may improve the identification of false positive defects (e.g. "candidate defects" detected by the object detection model that are found by the classifier to not be defects).

In an embodiment, the two-stage object detection model 600, 650 modifies the object detection model to include a single defect class (NG) instead of a plurality of defect classes. This may provide more dynamic range for defects to be located and classified and improve on poor inter-class model performance. In an embodiment, the defect classification model 524 uses ResNet50 with CUDA and TensorRT (pruning and optimization library for scaling down model size). This configuration of defect classification model may improve classification speed significantly. Further, this configuration of defect classification model may better facilitate meeting real-time detection requirements for a two-stage detection and classification model 600, 650.

Referring now to Figure 8, shown therein is a comparison of classification model performance for steel defects, according to embodiments. Figure 8 illustrates a first defect classification model 802 and second defect classification model 850. The second defect classification model 850 is a modified version of the first classification model 802 which demonstrated improved processing speed. The classification models 802, 850 are each configured to analyze an input image containing a defect, such as defect image 524, and assign a defect class label for the input image. The defect classes include rolled-in scale 804, patches 806, crazing 808, pitted surface 810, inclusion 812, and scratches 814. Example input images are shown for rolled-in scale defect type 816, patches defect type 818, crazing defect type 820, pitted surface defect type 822, inclusion defect type 824, and scratches defect type 826.

The second defect classification model 850 has been modified to include ResNet50, CUDA, and TensorRT. TensorRT accelerates the performance of model 850 as compared to model 802. TensorRT serializes model 850 into a memory and GPU efficient engine to run in real-time speeds. TensorRT-based applications (e.g. model 850) may perform up to 40x faster than CPU-only platforms during inference. TensorRT may optimize neural network models trained in major frameworks, calibrate for lower precision with high accuracy, and deploy to hyperscale data centers, embedded, or automotive product platforms. TensorRT is built on CUDA and enables optimization of inference for deep learning frameworks implemented by the systems described herein, leveraging libraries, development tools and technologies in CUDA-X. TensorRT provides INT8 and FP16 optimizations for production deployments of deep learning inference applications. Reduced precision inference significantly reduces application latency, which can be particularly important in manufacturing visual inspection applications.

The first defect classification model 802 demonstrated an average speed of 100ms per 200x200 pixel input image. The second defect classification model 850 demonstrated an average speed of 3.34ms per 200x200 pixel image. As shown, the second defect classification model 850 has a greatly improved defect classification speed and performance. The improved defect classification speed and performance reduces inspection time. Reducing inspection time helps the visual inspection system keep up with cycle time of a manufacturing line. Cycle time of the inspection system is a key design factor and is directly dependent on the speed of the Al algorithms and models. In this particular example, the second classification model 850 demonstrated a 2666% speed increase over the first classification model 802. Accordingly, various embodiments of the object detection components, and more particularly the defect classification components, described herein may incorporate similar modifications to the classification model architecture in order to achieve speed improvements and to facilitate real-time defect detection (which is often a requirement of manufacturing quality inspection).Referring again to Figure 5, the inspection image 502 is also provided to a golden sample module 526.

Generally, the golden sample module 526 is configured to analyze the inspection image 502 and a golden sample image, detect differences between the images (such differences may be termed "objects", "items", "candidate regions", or "(candidate) features", and be described by location data indicating a location of the detected difference), and record the differences as an output (e.g. an annotated inspection image). The output of the golden sample module 526 can be used, along with the output 518 of the object detection module 504 (and potentially the output of the defect classification module 520) to detect anomalies and new defects. New defects are considered those defects present in an inspection image 502 that are not recognized by the object detection module 504 (but have been identified by the golden sample module 526). The golden sample module 526 uses a golden sample image 528. The golden sample image 528 (or "golden sample", or "golden image") is a reference image that is intended to represent a "perfect" or "clean" version of the inspection image 502. That is, the golden sample image 528 is considered perfect by the system. Note, however, that the golden sample 528 may not actually be perfect and need not be perfect, as its role is to represent a perfect image for the purposes of analysis by the golden sample module 526. In other words, the golden sample image 528 is intended to provide a reference representing a perfect or clean image of a target article taken at the same position as the inspection image 502.

The golden sample module 526 receives the inspection image 502. The inspection image 502 may be received from the camera 304 or the object detection module 504. The golden sample module 526 passes the inspection image 502 to a generative model 530. The generative model 530 may be an autoencoder, such as a variational autoencoder. The generative model 530 is configured to generate a golden sample image 528 from the inspection image 502. A golden sample image 528 generated using the generative model 530 may be considered a "generative golden sample". In other embodiments, non-generative golden sample images may be used by the golden sample module 526.

In an autoencoder embodiment, the generative model 530 may include an encoder component, a code component, and a decoder component. The encoder component compresses an input (inspection image 502) and produces the code component. The decoder component reconstructs the input using only the code component. In this case, the term "reconstruct" refers to a reconstruction of a representation of the inspection image 502 which has less noise than the inspection image 502. Preferably, the reconstructed representation is noiseless. The reconstructed representation is the golden sample image 528 for the given inspection image 502 used as input to the generative model 530. The generative model 530 may include an encoding method, a decoding method, and a loss function for comparing the output with a target.

Generally, the generative model 530 receives an inspection image 502 that is a mixture of noisy and noiseless data. The generative model 530 may be trained using a training process which helps to set weights of the model 530 so that the model 530 knows what is noise and what is data. Once trained, the generative model 530 can be sent a noisy inspection image 502 and generate a noiseless (or less noisy) image at the output (i.e. a golden sample image 528). The noise removed from the inspection image 502 may be defects or any other deviation from a machined surface that is deemed as normal. The noise present in the inspection image 502 and which the generative model 530 is configured to remove may have various sources. The noise may be, for example, different types of defects or anomalous objects, droplets (of liquids) or stains from such liquids. Factory and other manufacturing facility environments and air therein are generally not clean and as a result there is a chance of having metal pieces, coolant residue, oil droplets, or the like left on the target article 306 (e.g. camshaft) after machining (e.g. CNC machining) and sitting on the floor for an extended period of time. Further, the target article 306 may be washed or covered with protective material such as rust-inhibitors or oil. In an embodiment, the generative model 530 learns the parameters of the probability distribution modeling the input data, instead of learning an arbitrary function (e.g. as in the case of standard autoencoders). The generative model 530 samples points from the distribution.

The golden sample module 526 also passes the inspection image 502 to a first pre-trained CNN 532. The first pre-trained CNN 532 generates an inspection image feature map from the inspection image 502. The golden sample module 526 passes the golden sample image 528 to a second pre-trained CNN 534. The second pre-trained CNN 534 generates a golden sample feature map from the golden sample image 528. The golden sample module 526 then uses a feature map analysis 536. The feature map analysis 536 includes comparing the inspection image feature map and golden sample feature map to identify differences in the feature maps. The golden sample module 526 stores the differences as feature map differences.

The golden sample module 526 may identify feature map differences by characterizing the differences as regions of interest and defining the regions of interest using bounding boxes. The bounding box data (coordinates) for the differences can be stored and linked to the inspection image 502. In an embodiment, the golden sample module 526 generates an annotated output image comprising the inspection image 502 and bounding boxes identifying regions of the inspection image 502 corresponding to feature map differences identified via the feature map analysis 536. The golden sample module 526 passes the feature map differences to a centroid and shape analysis component 538. The centroid/shape analysis component 538 analyzes a binary image created by thresholding feature map and finds centroid and boundary pixels of those blobs. The golden sample module 526 is configured to generate an eventual output (golden sample output) comprising pixel coordinates of centroids for such blobs.

Referring now to Figures 9A and 9B, shown therein are example representations 900, 950 of a variational autoencoder, such as may be implemented by the golden sample module 526, according to an embodiment. Figure 9A shows a first example representation 900 of a variational autoencoder. The autoencoder can be used to generate a reconstructed output image 902 from an original input image 904. The input image 904 may be the inspection image 502 of Figure 5 and the output image 902 may be the golden sample image 528 of Figure 5. The autoencoder includes an encoder 906, a latent representation 908, and a decoder 910. As shown, the original input image 904 is provided to the encoder 906. The encoder 806 is configured to generate a latent representation 908 of the input 904. The latent representation 908 is provided to the decoder 910. The decoder 910 is configured to generate the reconstructed output 902 from the latent representation 908.

Figure 9A shows a second example representation 950 of a variational autoencoder. The autoencoder includes an input layer 952, a first hidden layer 954, a code layer 956, a second hidden layer 958, and an output layer 960. The input layer 952 and the first hidden layer 954 form an encoder unit 962 of the autoencoder. The second hidden layer 958 and the output layer 960 for a decoder unit 964 of the autoencoder. Similar to the autoencoder of Figure 9A, an input image (e.g. inspection image 502) can be provided to the encoder unit 962 via the input layer 952. The encoder unit 962 generates a later representation of the input image at the code layer 956. The latent representation is provided from the code layer 956 to the decoder unit 964, which generates a reconstructed output (e.g. golden sample image 528) from the latent representation of the input. The variational autoencoder 950 may be an autoencoder whose training is regularized to avoid overfitting and ensure that the latent space has good properties that enable the generative process. Similar to a standard autoencoder, the variational autoencoder 950 is an architecture including an encoder 962 and a decoder 964 and that is trained to minimize the reconstruction error between the encoded-decoded data and the initial data.

In the variational autoencoder, the input may be encoded as a distribution over the latent space. This introduces some regularization of the latent space. The variational autoencoder 950 may be trained by first encoding the input as a distribution over the latent space. Next, a point from the latent space is sampled from the distribution. Next, the sampled point is decoded and the reconstruction error is computed. Next, the reconstruction error is backpropagated through the network. However, in order to introduce some regularization of the latent space, we proceed to a slight modification of the encoding-decoding process: instead of encoding an input as a single point, we encode it as a distribution over the latent space.

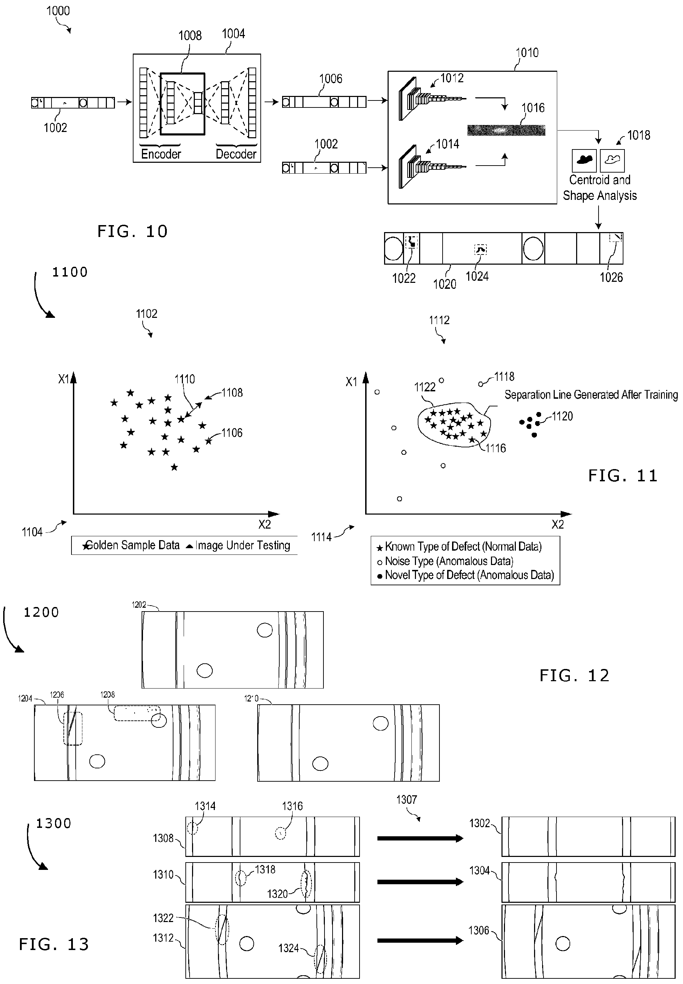

Referring now to Figure 10, shown therein is a golden sample processing and analysis pipeline 1000, according to an embodiment. The pipeline 1000 may be implemented by the golden sample module 526 of Figure 5. The pipeline 1000 starts with an inspection image 1002 of the target article. The inspection image 1002 is passed to a generative model 1004. In the example pipeline 1000, the generative model 1004 is a variational autoencoder, such as the variational autoencoders of Figures 9A and 9B. The generative model 1004 is configured to generate a golden sample image 1006 from the inspection image 1002 (i.e. a generative golden sample image). The generative model 1004 includes a component 1008 which includes at least one hidden layer of the encoder unit of the generative model and a code layer which includes encoded data or latent representation. Generally, the inspection image 1002 is passed to an input layer of the generative model 1004 and a reconstructed output comprising a golden sample image 1006 is produced at an output layer of the generative model 1004.

The inspection image 1002 and golden sample image 1006 are each passed to a golden sample analysis component 1010. Generally, the golden sample analysis component 1010 is configured to detect and identify differences between the inspection image 1002 and the golden sample image 1006. The golden sample image 1006 is fed to a first pre-trained convolutional neural network 1012 and a golden sample feature map is generated. The inspection image 1002 is fed to a second pre-trained convolutional neural network 1014 and an inspection image feature map is generated. The golden sample analysis component 1010 compares the golden sample feature map and the inspection image feature map and generates a feature map comparison 1016. The feature map comparison 1016 notes instances of differences between the feature. Such instances of differences may be represented as an annotated inspection image including indicators where differences have been detected. This may include creating a bounding box defining the location of the difference.

Generally, differences identified between the inspection image 1002 and the golden sample image 1006 may fall into two categories: defects and anomalies. Defects may correspond with defects identified by the object detection module 504 (previously learned or known defects) or may be objects not identified by the object detection module 504 ("new" defects). The categorization of differences between the inspection image 1002 and the golden sample image 1006 is performed using the output 518 of the object detection module 504 (and, in some cases, the output of the classification module 520). For example, differences identified by the golden sample module 526 that are also detected by the object detection module 504 (i.e. in the object detection output) may be labelled.

At 1018, a centroid and shape analysis is performed on differences identified in the comparison image. The output of the centroid and shape analysis may be used to generate a golden sample output comprising an annotated inspection image that can be compared with an object detection output (e.g. annotated inspection image with detected defects, annotated inspection image with detected and classified defects). The output of the centroid and shape analysis 1018 can be fed into an anomaly detection module 540, along with a defect detection (and possibly defect classification) output image, to generate an annotated anomaly detection image 1020. To generate the output image 1020, objects detected in the object detection output of the are compared with objects detected in the golden sample analysis output (i.e. differences between the golden sample image 1006 and the inspection image 1002) to determine whether a detected object is a known or previously identified defect, a new (unknown) defect, or an anomaly. The output image 1020 is an annotated inspection image in which each of the differences are identified by a bounding box and labelled. Examples are shown in output image 1020 of a previously learned defect 1022, a newly learned defect 1024, and an anomaly 1026.

In another embodiment of the pipeline 1000, generative model component 1008 may be used in place of the golden sample analysis component 1010. In such an embodiment, the golden sample image 1006 and the inspection image 1002 may each be fed to the generative model component 1008 and a latent representation of each is generated. The latent or encoded representations may then be compared to determine differences between the golden sample image 1006 and the inspection image 1002. Differences are recorded by the golden sample module and passed to the anomaly detection module 540.

Referring now to Figure 11, the golden sample module 526 may learn the distribution of anomalies using semi-supervised or unsupervised learning algorithms. For example, in an embodiment, the golden sample module 526 may use distance-based anomaly detection 1102. A plot 1104 is shown which includes golden sample image data 1106 and an image under testing 1108. The distance-based anomaly detection 1102 finds abnormal data based on the distance 1110 between the golden sample image and new data (i.e. image under testing 1108). In another embodiment, the golden sample module 526 may use unsupervised anomaly detection 1112. A plot 1114 is shown which includes known type of defect data (i.e. normal data) 1116, noise type data (anomalous data) 1118, and novel type of defect data (anomalous data) 1120. The unsupervised anomaly detection 1112 finds abnormal data based on previous observed samples of normal and abnormal data. A separation line 1122 is shown around normal data 1116, which may be generated after training.

Reference is now made to Figures 12 to 14, which illustrate example images generated by the visual inspection system of the present disclosure, according to embodiments. Referring now to Figure 12, shown therein are illustrations of example images 1200 which illustrate performance of the generative golden sample process of the present disclosure as compared to a golden sample process using a reference image from a reference bank of golden samples. Figure 12 shows an inspection image 1202 of a camshaft taken by a visual inspection system, such as the visual inspection system 300 of Figure 3 (i.e. using camera 304). Image 1204 is a golden sample image using a non-generative golden sample approach in which a golden sample image is identified from a bank of golden sample images using an image processing (e.g. registration-based) technique using the inspection image. While this version of golden sample analysis may be implemented by the visual inspection systems described herein, it has disadvantages compared to the generative golden sample approach. For example, this approach may be sensitive to variations of a machined surface of the target article.

The non-generative golden sample image 1204 includes two scratches 1206, 1208. The presence of these scratches 1206, 1208 in the golden sample image 1204 may introduce error into the whole golden sample algorithm. Image 1210 is a customized (or generative) golden sample image for the inspection image 1202 using a generative golden sample approach of the present disclosure. The image 1210 was generated from the inspection image 1202 using a generative model (autoencoder), such as generative model 530. The generative model is trained to recognize noise in the inspection image data 1202 such that a noisy inspection image can be sent to the autoencoder and the autoencoder generates a noiseless image which can serve as a golden sample image for the inspection image. In this case, as can be seen, the generative golden sample process advantageously generates a golden sample image 1210 which does not include the two scratches 1206, 1208 present in the non-generative golden sample image 1204. By doing so, both the golden sample analysis and overall anomaly detection processes implemented by the visual inspection system can be improved.

Referring now to Figure 13, shown therein is an illustration 1300 of a plurality of example golden sample images 1302, 1304, 1306 generated using the generative golden sample process of the present disclosure, according to an embodiment. The generative golden sample process is denoted by arrows 1307. The images are of a camshaft being visually inspected using the visual inspection system of the present disclosure. The golden sample images 1302, 1304, 1306 have been generated from inspection images 1308, 1310, and 1312, respectively, using the generative golden sample process 1307. As illustrated, inspection image 1308 includes two defects (or noise elements) 1314 and 1316. Inspection image 1310 includes two defects 1318, 1320. Inspection image 1312 includes two defects 1322 and 1324. The generative golden sample process 1307 has reconstructed the golden sample images 1302, 1304, 1306 from the inspection images 1308, 1310, 1312, while removing the defects. The golden sample process 1307 removes noise from the inspection images 1308, 1310, 1312 to generate the golden sample images 1302, 1304, 1306. The golden sample images 1302, 1304, 1306 can be used for further golden sample analysis (the output of which is used for anomaly detection) along with the respective inspection image 1308, 1310, 1312.

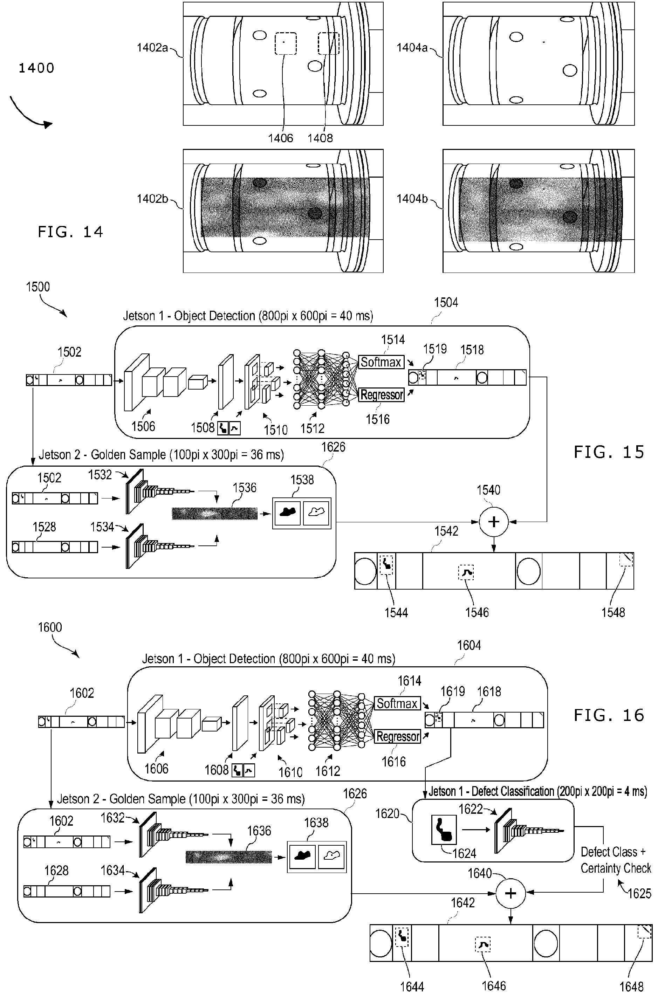

Referring now to Figure 14, shown therein is an illustration 1400 of a plurality of example golden sample images using non-generative and generative golden sample processes, according to embodiments. The images are of a camshaft being visually inspected using the visual inspection system of the present disclosure. Images 1402a and 1402b are example non-generative golden sample images for use by the golden sample module 526 using a golden sample reference bank approach. The non-generative process may include, for example, application of an image processing technique such as registration to an inspection image and one or more golden sample images to determine the closest match for comparison. Images 1404a and 1404b are example generative golden sample images for use by the golden sample module 526 and generated using the generative golden sample process of the present disclosure. Non-generative golden sample image 1402a includes a false negative detection 1406 and a false positive detection 1408. In contrast, generative golden sample image 1404a does not include any false negatives or false positives (including those present in image 1402a).

Images 1402a and 1404a provide the analysis from two different versions of golden sample for the same image. Images 1402b and 1404b are the output feature map of those versions 1402a, 1404a for the identical input image (i.e. non-generative golden sample feature map and generative golden sample feature map). Image 1402b is generated using a non-generative golden sample technique. Image 1404b is generated using a generative golden sample technique. In the case of image 1404b, a generative model is used to synthesize a golden sample image. In the case of 1402b, an actual image of an OK target article (camshaft) is used..

As can be seen, image 1402a includes a false negative 1406 and a false positive 1408. The camshaft in image 1402 includes a rubber seal ring in this segment and its joining point (area inside the red box called "False Positive") may land anywhere around the camshaft during installation. Synthetic golden sample 1404a can create this crack in exactly same position as the inspected image. The reason for false positive 1408 is an inability of the non-generative golden sample technique to account for variability of the location while performing a pixel-to-pixel comparison of the inspected image to an actual image of an OK part with a joining point that might be different than inspected image. Because of such issues, the non-generative golden sample technique has lower sensitivity to more minute anomalies such as a cluster of small-size defects. This may also explain why it has failed to detect the patch of dents over the camshaft (i.e. false negative 1406).

Referring again to Figure 5, the pipeline 500 further includes an anomaly detection module 540. The anomaly detection module 540 receives and processes outputs from the object detection module 504 and the golden sample module 526. In some cases, the anomaly detection module 540 may receive defect class information determined by the defect classification module 520. Accordingly, in pipeline 500 each of the object detection module 504, defect classification module 520, and golden sample module 526 are shown as communicatively connected to the anomaly detection module 540. However, it is to be understood that in certain implementations only one of the object detection module 504 and defect classification module 520 may pass information to the anomaly detection module 540.

In an embodiment, the anomaly detection module 540 is implemented at the same device implementing the object detection module 504.

The anomaly detection module 540 receives a golden sample output from the golden sample module 526 comprising an annotated inspection image. The annotated inspection image includes detected items comprising differences between the golden sample image 528 and the inspection image 502 identified during feature map analysis 536. A detected item may be described using a bounding box defining a region of interest which contains the detected difference.

The anomaly detection module 540 receives an object detection output from the object detection module 504 comprising one or more bounding boxes each of which contains a defect detected by the object detection module 504 (e.g. object detection output 518). The object detection output received by the anomaly detection module 540 may further include defect classification data (i.e. a defect class label) generated by the defect classification module 520.

The anomaly detection module 540 analyzes the golden sample output and object detection output to identify differences between the outputs. This analysis may include a comparison of annotated inspection images. For example, each of the golden sample output and the object detection output may comprise an inspection image 502 annotated with various metadata or annotation data such as bounding boxes defining regions of interest determined by the respective modules 504, 526. The anomaly detection module 540 may compare the annotation data (e.g. the bounding box coordinates) to determine whether there are differences between the golden sample output and the object detection output.

Items that appear in both golden sample and object detection outputs may be tagged by the anomaly detection module 540 as confirmed defects. Confirmed defects may be considered "known defects" or "previously learned defects" (i.e. known or learned by the system), as such defects were detected by the object detection module 504. In this way, the anomaly detection module 540 provides a double check on the results of the object detection module 504. In some embodiments, the outputs (and the items or "objects" or "candidate regions" identified therein) may not need to be identical for the anomaly detection module 540 to tag items as confirmed defects. For example, the anomaly detection 540 may be configured to accept and confirm items having approximately the same location, which may be determined by an acceptable pixel amount variance. In other embodiments, the items may need to have identical locations in order for the anomaly detection module 540 to accept or confirm the defects.

In an embodiment, the anomaly detection module 540 is configured to compare object location and class information provided by the golden sample module 526 and object detection module 504 to determine if the modules 504, 536 have seen the same object. The anomaly detection module 540 may compare only object location and class information.

As indicated above, the anomaly detection module 540 may be configured to be variation tolerant. In a particular embodiment, the anomaly detection module 540 determines whether the centroid of a candidate anomalous region (object) from a golden sample output lands inside of an object bounding box from an object detection output. The anomaly detection module 540 confirms the object as a defect if the centroid lands inside the object bounding box. The anomaly detection module 540 may identify and flag the object as an anomaly if the centroid does not land inside the object bounding box.

Differences between the golden sample and object detection outputs may be flagged by the anomaly detection module 540 and presented to a user (e.g. expert) for review. This may include presentation of differences via an annotated inspection image including the differences in a user interface displayed on a user device. Items that are present in the golden sample output and not in the object detection output may be either a new defect type (i.e. a defect type not currently detected by the object detector model 508) or an anomaly (a non-defect variation or artifact).

Items detected by the golden sample module 526 but not by the object detection module 504 (that is, differences between the two outputs) may be presented in a user interface. For example, the user interface may present an annotated version of the inspection image 502, or a portion thereof, which includes details on differences and request a user input to identify the new item (i.e. difference) as a new defect type or an anomaly. The user can view the annotated inspection image in the user interface and provide input data identifying the item as an anomaly of new defect. In the case of a new defect type, the user interface may be configured present a user interface element for receiving user input data comprising a defect class label indicating the defect type.

The anomaly detection module 540 may then label or tag the new detected item as an anomaly or new defect type based on the input data received from the user and store this information in the system. This may include a unique anomaly identifier for an anomaly or a new defect identifier for a new defect. Annotated inspection images that contain new defect types may also be identified or tagged as training samples (which may include label information such as a new defect class). The training samples can be used as training data for further training of the object detection model 508 and/or defect classification model 522 such that the models 508, 522 can be updated to detect and/or classify the new defect type. Such updating of models 508, 522 may occur regularly. The anomaly detection module 540 is configured to send inspection images which have been identified as including a new defect type to a training database for use in subsequent training.

The anomaly detection module 540, and the anomaly detection pipeline 500 generally, may provide various advantages. The anomaly detection module 540 may allow for the detection of anomalies. The anomaly detection module 540 may allow for the identification of new defects and subsequent training of models to recognize new defects as part of an ongoing process. The anomaly detection module 540 may also provide a double check mechanism for the object detection 504 and defect classification 520 components of the system, which may reduce error such as false positives.

In an embodiment of the pipeline 500, the object detection module 504 generates an output including an object location (e.g. bounding box coordinates, object location data) and an object class for each object detected by the object detection model 505 (e.g. a list of detected objects). The classification module 520 generates an output including an object (defect) class using the classification model 522. The classification module 520 may then feed the object class information to the object detection module 504. The object detection module 504 compares the object class from the object detection model 505 and the object class from the classification model 522 to determine if the class assignments match. If the class assignment of the modules 504, 520 match, then the object detection module 504 passes the object class information and object location information to the anomaly detection module 540 for comparison with the golden sample output.

Reference is now made to Figures 15 and 16, which illustrate anomaly detection pipelines 1500 and 1600, respectively, for camshaft visual inspection, according to embodiments. The anomaly detection pipelines 1500, 1600 are similar to the anomaly detection pipeline 500, described in reference to Figure 5, with the exception of differences discussed below including the application to camshaft visual inspection. To avoid repetition, similarities are not discussed. Accordingly, other than below-discussed differences, everything said heretofore about the pipeline 500 may apply to the pipelines 1500, 1600 as well.

In Figures 15 and 16, elements and components with similar functions to elements and components of pipeline 500 of Figure 5 are referred to with like reference numbers incremented by 1000 and 1100, respectively (i.e. 1500-series and 1600-series reference numerals are used). In other words, if an element or component of pipeline 500 is referred to by reference number 5xx and the element or component has a counterpart in the pipeline 1500 or the pipeline 1600, the counterpart element or component in the pipelines 1500, 1600 is referred to by reference numbers 15xx and 16xx, respectively.

Referring now to Figure 15, the anomaly detection pipeline 1500 starts with inspection image 1502. Inspection image 1502 is of a camshaft at a particular position on the camshaft. The inspection image 1502 is fed to object detection module 1504. The object detection module 1504 is implemented at a first node computing device (Jetson 1). The object detection module 1504 is configured to process inspection images 1502 having a pixel resolution of 800x600. The object detection module 1504 may process the inspection image 1502 in 40ms. The object detection module 1504 includes a CNN comprising an object proposal component 1506, a feature map component 1508, a Rol pooling component 1510, a fully connected layers component 1512, a softmax component 1514, and a regressor component 1516.

The object detection module 1504 uses the CNN to generate object detection output image 1518. In this case, object detection output image 1518 includes a detected defect 1519. The detected defect 1519 is identified in the output image 1518 by a bounding box. The output image 1518 is annotated with metadata describing the detected defect 1519 (e.g. bounding box information). The output image 1518 is passed form the object detection module 1504 to an anomaly detection module 1540.

The output image 1518 can also be fed to a defect classification module (not shown), such as defect classification module 520 or 1620. Feeding the output image 1518 to the defect classification module may include feeding the entire output image 1518 or a portion thereof corresponding specifically to the detected defect 1519 (i.e. the region of interest containing the defect 1519). In cases where only a portion containing the detected defect 1519 is passed to the defect classification module 1520, the region of interest may be effectively cropped from the output image 1518, for example using the bounding box information.

The inspection image 1502 is also passed to a golden sample module 1526. The golden sample module 1526 is implemented at a second node computing device (Jetson 2). The golden sample module 1526 is configured to process inspection images 1502 and golden sample images 1528 having a certain pixel resolution (e.g. 100x300pi). The golden sample module 1526 may process the inspection image 1502 and golden sample image 1528 in 36ms. The CNN architecture for the object detection module 1504 may be different than the golden sample module 1526. Input size requirements for the two networks are dictated by the design of the networks and thus, in some cases, the input image may be resized by one or both of the modules 1504, 1526 to match the input requirement of the respective network.

The golden sample module 1526 passes the inspection image 1502 and a golden sample image 1528 to first and second pre-trained CNNs 1532, 1534, respectively, to generate feature maps for the inspection image 1502 and the golden sample image 1528. The feature maps are compared using a feature map analysis 1536. Feature map analysis 1536 shows an example output image that may be generated by the feature map analysis 1536. As can be seen, certain differences (detected items) have been detected. The output of the feature map analysis 1536 is provided to a centroid and shape analysis component 1538.

The golden sample image 1528 may be a generative golden sample image generated by a generative model, such as generative model 530 of Figure 5. In other embodiments, the golden sample image 1528 may be a non-generative golden sample image. For example, the golden sample image 1528 may be retrieved from a reference bank of golden sample images based on an image registration process. This may include identifying a position from which the inspection image 1502 was acquired (e.g. a camshaft rotation angle or position) and performing image registration with one or more candidate golden sample images from the reference bank to identify the golden sample image 1528 for use by the golden sample module 1526.

The output of the centroid and shape analysis component 1538 is passed from the golden sample module 1526 to the anomaly detection module 1540.

In some cases, only a subset of data may be passed from each of the modules 1504, 1526 to the anomaly detection module 1540. For example, the object detection module 1504 and golden sample module 1526 may send only as much information as is needed to perform a comparison of the defects detected by the object detection module 1504 and the detected items identified by the golden sample module 1526. This information, may include, for example, bounding boxes or other image metadata annotating the image (e.g. size, defect class).

The anomaly detection module 1540, having received the object detection image 1518 and the output of the golden sample module 1526 performs a comparison on the outputs. This includes generating an annotated inspection image 1542 which includes metadata describing objects detected by either the object detection module 1504 and the golden sample module 1526. The objects may be tagged with identifiers depending on whether the object is determined to be a known defect or not, and whether an object other than a known defect is a new defect or an anomaly.

The annotated image 1542 includes objects 1544, 1546, and 1548.

Object 1544 corresponds with detected defect 1519 identified by the object detection module 1504 and has been confirmed via the golden sample output.

Objects 1546 and 1548 were not detected by the object detection module 1504 (as shown by the lack of bounding boxes at those positions in image 1518) but were identified by the golden sample module 1526. Accordingly, the anomaly detection module 1540 flags objects 1546 and 1548 for review by a human expert.

As previously noted, the objects 1546 and 1548 may be a new defect type or an anomaly. The anomaly detection module 1540 triggers the presentation of the annotated image 1542 (or a portion thereof including the objects 1546, 1548 or metadata thereof) via a user interface. The user interface is configured to receive input data from a user labelling the objects 1546 as a new defect or an anomaly. In this case, object 1546 has been labelled as a new defect type and object 1548 has been labelled as an anomaly.

The anomaly detection module 1540 may be configured to send the image 1542 or a portion thereof containing object 1546 to an object detection training database upon object 1546 being labelled as a new defect type (e.g. via a user input) for training or retraining the object detection module 1504 to detect the new defect type.

Referring now to Figure 16, the anomaly detection pipeline 1600 operates in a substantially similar manner to pipeline 1000. Pipeline 1600 further includes a defect classification module 1620. The defect classification module 1620 is implemented on the same node device as the object detection module 1620 (Jetson 1). The defect classification module 1620 processes images with a pixel resolution of 200x200. The defect classification module 1620 can process the images in 4ms. The defect classification module 1620 receives defect image 1624 from the object detection module 1604. The defect image 1624 includes detected defect 1619 identified by the object detection module 1604. The defect image 1624 is passed to a classification model 1622 comprising a CNN. The classification model 1622 analyzes the defect image 1624 and generates a class label (defect class) for the defect.

The system may be configured to perform a certainty check using the object detection network and classification network. In an embodiment, the object detector passes the (object location + object class) to the classification network to make sure the classification network sees the same object class. The certainty check mechanism implemented by the system provides certainty that the two different networks (object detection and classification) determine the same defect class at the same relative location. If there is a discrepancy between the classes generated by the two networks, the determination is uncertain and should not proceed. The uncertain detection may be flagged by the system (e.g. via object detection module 1604) for future investigation and the system may continue with the process.

The defect class information 1625 and the object detection output 1618 are passed to the anomaly detection module 1640 for analysis with the output of the golden sample module 1626. The information sent by the object detection module 1604 and/or the classification module 1620 may include a defect class and certainty check information.

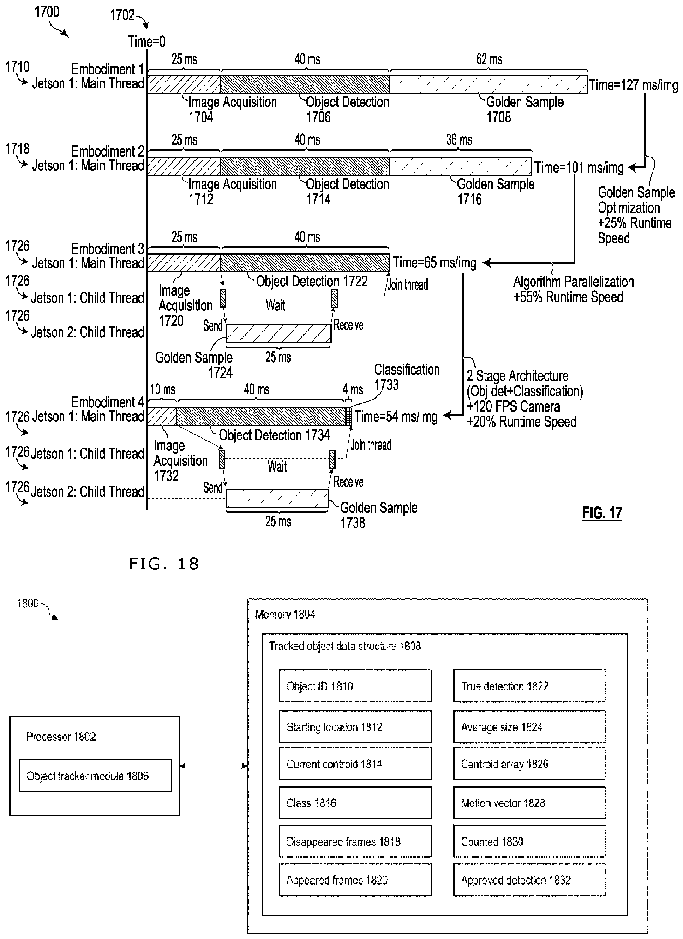

Referring now to Figure 17, shown therein is a graphical representation 1700 of various embodiments of the anomaly detection algorithms provided by the present disclosure, which will now be discussed with particular reference to performance characteristics.

Four embodiments are shown: Embodiment 1, Embodiment 2, Embodiment 3, and Embodiment 4. In each of the embodiments, the anomaly detection algorithm includes an image acquisition stage, an object detection stage, and a golden sample stage.

The graphical representation 1700 includes a time axis 1702 at which time is equal to 0 and against which the speed performance of the anomaly detection algorithms of Embodiments 1 to 4 is illustrated.

Embodiment 1 includes an image acquisition stage 1704, an object detection stage 1706, and a golden sample stage 1708. Embodiment 1 further includes a main processing thread 1710 running on a node computing device (Jetson 1). The image acquisition 1706, object detection 1708, and golden sample 1710 stages are performed in sequence in the main thread 1710 as part of a serialized process. The image acquisition stage 1704 is 25ms, the object detection stage 1706 is 40ms, and the golden sample stage 1708 is 62ms. The total time of the anomaly detection algorithm is 127ms per image.

Embodiment 2 includes image acquisition stage 1712, object detection stage 1714, and golden sample stage 1716. Embodiment 2 includes modifications to the golden sample stage 1708 of Embodiment 1. Embodiment 2 also includes a main processing thread 1718 running on a node device (Jetson 1). The golden sample optimization reduced the golden sample stage 1716 time to 36ms from 62ms and reduced the overall processing time of the anomaly detection algorithm to 101ms per image from 127ms per image. This provided a +25% runtime speed improvement.

Embodiment 3 includes image acquisition stage 1720, object detection stage 1722, and golden sample stage 1724. Embodiment 3 of the anomaly detection algorithm further includes parallelization of the anomaly detection algorithm of Embodiment 2. Embodiment 3 includes a first main processing thread 1726 running on a first node device (Jetson 1), a child processing thread 1728 running on the first node device, and a second main processing thread 1730 running on a second node device (Jetson 2). The first main processing thread 1726 includes the image acquisition stage 1720 and object detection stage 1722. The second main thread 1730 includes the golden sample stage 1724. The optimizations producing the reduction in time included implementation of the code in another programming language. The parallelization of the anomaly detection algorithm in Embodiment 3 reduced the overall processing time to 65ms per image from 101ms per image (providing a +55% runtime speed improvement).

In an embodiment, a first main thread running on Jetson 1 (first node device) runs the image capture and object detection networks. The first main thread spawns a child thread to send the inspection image to Jetson 2 (second node device with golden sample module, executing a second main thread) and waits for a response back. Since there is a "wait" happening with the child thread, the first main thread can continue its costly computations until it is ready for the response back from the child thread (i.e. what the reply was from Jetson 1). In this case, "wait" is the child thread waiting for a reply back from Jetson 2. "Send" is the child thread sending the image to Jetson 2. "Receive" is the child thread receiving a response from Jetson 2. "Join thread" is the first main thread asking the child thread to provide its response data before closing the thread to free its memory. Send and Receive are the operation of encoding and decoding of the transferred images using H264 compression codec.

Embodiment 4 includes image acquisition stage 1732, object detection stage 1734, defect classification stage 1736, and golden sample stage 1738. Embodiment 4 is a modified version of Embodiment 3 using a 120 FPS camera and a two-stage object detection architecture including the object detection stage 1734 and the defect classification stage 1736. Embodiment 4 includes a first main processing thread 1740 on a first node device, a child processing thread 1742 on the first node device, and a second main processing thread 1744 on a second node device. The first main processing thread 1740 includes the image acquisition stage 1732, the object detection stage 1734, and the defect classification stage 1736. The second main processing thread 1744 includes the golden sample stage 1738.

The improvement to the camera in Embodiment 4 improved acquisition time. The previous embodiments used a camera at 41 FPS. Cameras at 41 FPS take 24.3 milliseconds to get image information from the sensor to the software. A camera of 120 fps can do the same process in only 8.33 milliseconds. Over thousands of images, this extra time starts to add up. Accordingly, as much time as possible in the image acquisition stage of the entire pipeline can provide more time allowance for pre-processing/inference/post-processing of the acquired data.

As illustrated, Embodiment 4 includes the additional classification stage 1736 in the first main processing thread 1740 as part of the two-stage object detection architecture. The classification stage 1736 demonstrated a processing time of 4ms per image. The image acquisition stage 1732 of the first main processing thread 1740 demonstrated a reduced processing time of 10ms per image from 25ms per image in Embodiment 3. Embodiment 4 demonstrated an overall processing time of 54ms per image which was down from 65ms per image processing time of Embodiment 3. As a result of the modifications, Embodiment 4 demonstrated a +20% runtime speed improvement over Embodiment 3. Embodiments of the visual inspection systems and methods described herein using object tracking will now be described.

Referring now to Figure 18, shown therein is a computer system 1800 for object tracking during visual inspection of a target article, according to an embodiment. The computer system 1800 may be implemented at any one or more computing devices described herein. For example, in certain embodiments, the computer system 1800 may be implemented at the worker node device 310 of Figure 3 or the Al visual inspection device 12 of Figure 1. The computer system 1800 is in communication with an object detection module, such as object detection component 314 of Figure 3. The computer system 1800 may be in communication with object detection module 504 and defect classification module 520 of Figure 5. The object tracking process implemented by the computer system 1800 may provide the advantage of making object detection more robust to false positives.

The computer system 1800 includes a processor 1802 in communication with a memory 1804. The processor 1802 includes an object tracker module 1806. The object tracker module 1806 comprises computer-executable instructions which, when executed by the processor 1802, cause the computer system 1800 to perform an object tracking process. The object tracking process includes tracking objects that are detected using a computer-implemented object detection process across multiple images or frames of a target article. For example, the target article may be imaged a plurality of times (e.g. a video comprising a plurality of frames) as the target article is moved relative to the camera. In an embodiment, the tracked objects are defects in the target article detected by an object detection component of the visual inspection system (e.g. object detection component 314 of Figure 3).

The object tracker 1806 may provide a human operator with confidence that a detected object is not a false positive by tracking the detected object over a threshold number of frames. Accordingly, the object tracker 1806 may advantageously reduce instances of false positive object detections in the visual inspection system. The memory 1804 stores a tracked object data structure 1808. The tracked object data structure 1808 includes various data about a tracked object. The data stored in the tracked object data structure 1808 is generated and updated by the object tracker module 1806. The data structure 1808 includes a unique object ID 1810 assigned by the object tracker 1806. The data structure 1808 also includes various other data for the tracked object linked to the unique object ID 1810 including an object starting location 1812, a current centroid 1814, a class 1816, disappeared frames 1818, appeared frames 1820, a true detection status 1822, an average size 1824, a centroid array 1826, a motion vector 1828, a counted value 1830, and an approved detection status 1832.

The counted value 1830 refers to if the object tracker is counting each specific ID as it crosses a "line" or specific segment in the image. If the object tracker determines a true detection and approves the true detection, the object tracker maintains a tally of how many defects have been seen by the system over the past 24 hours (or other time period, as the case may be). Accordingly, it can be advantageous for the object tracker to count each defect in particular, hence the counted field (counted value 1830) to let the object tracker know that the particular defect has been counted by an external software application. In various embodiments, the tracked data structure 1808 may include any one or more of the various data types 1812, 1814, 1816, 1818, 1820, 1822, 1824, 1826, 1828, 1830, 1832. Additional data types may also be included and linked to the object ID.

The object tracker module 1806 may comprise a software library. The software library may be input into a code base of one or more software components or modules described in the present disclosure. For example, the software library may be input into the code base of an object detection component, such as object detection component 314 of Figure 3. The software library may be input into the code base of a golden sample component, such as golden sample component 316 of Figure 3.

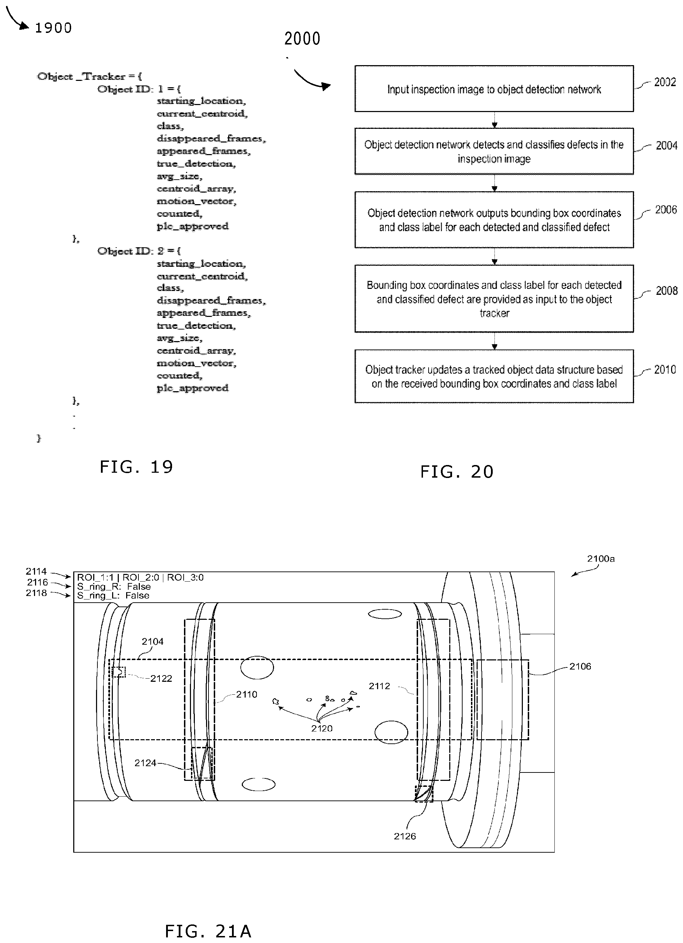

Figure 19 illustrates an example code representation 1900 of the object tracker, according to an embodiment. The object tracker module 1806 takes an initial set of object detections and creates a unique ID for each of the initial detections. The initial set of object detections may be an input set of bounding box coordinates. The initial set of object detections may include class labels for each detected object. The initial set of object detections are provided by an object detection network, such as the object detection component 316 of Figure 3.

The object tracker module 1806 tracks each of the objects as they move across subsequent images (frames in a video). The object tracker 1806 maintains the assignment of the unique IDs during tracking. The object tracker module 1806 may do so using a simple Euclidean distance metric. Using this metric, the object tracker module 1806 keeps track of each object and "maintains" an organized structure of everything the object tracker module 1806 is seeing.

The object tracker module 1806 generates and assigns a unique ID to each tracked object (e.g. Object ID: 1). Assignment of the unique IDs by the object tracker 1806 allows for counting of unique objects in a video. The counting functionality of the object tracker module 1806 allows educated and smart decisions to be made on what to do with each object. Each unique object only needs to be approved once. The unique objects can be counted over time. The objects can be sized properly over multiple frames as the object rotates. The object tracker module 1806 monitors motion vectors of the objects. Tracking unique objects is an important component of the object tracker 1806. The object tracker module 1806 tracks each unique object simultaneously. The object tracker module 1806 may do so using position information (e.g. location in the image frame, coordinate information) and class information (e.g. defect class identifier, such as "scratch") for the object.

The object tracker module 1806 can track objects that miss frames randomly. The algorithm implemented by the object tracker module 1806 expects objects to move a maximum number of pixels in a specific direction per frame. With that information, if the object is not seen in the next frame, the object tracker module 1806 marks that particular object as missing in the dictionary and moves on. If the object then reappears in the 2 frame, the object tracker module 1806 makes sure its Euclidean distance is still within the bounds of where the object is expected to be and removes its disappeared flag to continue as normal.

The object tracker module 1806 may use dynamic average sizing for each object over multiple frames. The object tracker module 1806 may record the size of the defect over multiple frames to allow for better accuracy of measurement since intersection over union (IOU) of the object detector is not 100% accurate when approximating bounding boxes around objects. The use of dynamic average sizing may provide better precision. For example, bounding boxes outputted by a software component of the present disclosure configured to detect objects (e.g. object detector module, golden sample module) may be noisy and may not outline the detected object exactly. By determining and averaging object size across a plurality of frames, the object tracker 1806 may determine an average object size that is a more accurate or precise measurement of the true object size. Accurate sizing of a defect can be particularly important in embodiments where a defect size is used to determine whether a defect tolerance is exceeded. This is because whether the defect is within the accepted defect tolerance or not may ultimately determine whether the target article being visually inspected is classified as defective or not. In this way, inaccurate sizing may lead to some defective target articles being accepted or some non-defective articles being deemed defective and wasted.

The object tracker module 1806 may track a motion vector for each object. The motion vector is used by the object tracker module 1806 for future prediction of where the object is expected to appear in the next frame. The object tracker module 1806 may update the tracked object data structure 1804 with new objects at a speed of approximately 0.113ms. The object tracker module 1806 may be configured such that all existing bounding boxes are correlated to the already observed and tracked objects in the object detector before the new objects. This leaves the remaining bounding boxes for new objects to be added into the tracker as a new entity. The object tracker module 1806 may index and search tracker for specific objects at a speed of approximately 0.395s. Indexing includes searching and scanning the object tracker for all the information stored on the current objects. The object tracker module 1806 may be configured to keep the indexing and search speed as fast as possible so that there is low latency and low overhead to the system.

In an embodiment, the object tracker module 1806 implements a centroid tracking algorithm. The centroid tracking algorithm relies on the Euclidean distance between existing object centroids (i.e. objects the object tracker 1806 has already seen before) and new object centroids between subsequent images or frames in a video.

The centroid tracking algorithm may operate according to a primary assumption encoded in the object tracker 1806 that a given object will potentially move in between subsequent frames, but that the distance between the centroids for that object for frame Frame(n) and Frame(n+1) will be smaller than all other distances between other objects.

The object tracking module 1806 may comprise optimized code including loops and functions. The code may be Cynthonized to provide performance improvements. The object tracking module 1806 is configured to assign and maintain a tracking status for each tracked object. The tracking status is stored in the tracked object data structure 1804. The tracking status may be assigned from a plurality of possible tracking statuses. The tracking statuses may include a first tracking status which corresponds to an unconfirmed detection (or "not a true detection").

The first tracking status is assigned to a tracked object that has been "seen" or detected in fewer than N frames, where N is an integer greater than 0. N represents a threshold number of frames in which a tracked object must be seen in order to be considered a confirmed or true detection by the object tracker module 1806. In an embodiment, N is 5. In other words, the first tracking status is assigned to an object that has been detected but not tracked across a requisite number of frames. The number N may be determined based on how many times an object is expected to be seen once the object enters the frame to the moment the object leaves the frame on the other side. N may be 3-5. The tracking statuses may include a second tracking status which corresponds to a confirmed or true detection.

The second tracking status is assigned to a tracked object that has been seen or detected in N frames or more. In other words, the second tracking status is assigned to an object that has been detected and tracked across a requisite number of frames (e.g. N frames).

The tracking status may include a third tracking status which corresponds to an approved confirmed detection (or approved true detection). The third tracking is assigned to a tracked object that has achieved the second tracking status (i.e. tracked across N frames) and which exceeds a defect tolerance stored in memory 1804 or in other data storage otherwise accessible to the computer system 1800. In other words, the third tracking status may be assigned to an object that has been detected and tracked across a requisite number of frames and which meets a pre-determined defect tolerance.

In an embodiment, the object tracker 1806 sends tracked object data including at least an object size (e.g. average size 1824) to a PLC device (e.g. PLC 320 of Figure 3) for each tracked object that has been assigned the second tracking status. In some cases, such as where the visual inspection system is configured to detect and classify multiple types or classes of defects, the tracked object data sent to the PLC may further include a class label for the tracked object. The PLC stores defect tolerance information for one or more defect classes. The defect tolerance information may include a defect class identifier linked to a size tolerance. The PLC may receive the tracked object data and reference the stored defect tolerance information using the defect class and defect size information to determine whether the tracked object exceeds the defect tolerance or not. The result of the tolerance determination may be provided to the object tracker 1806.

In some cases, the PLC may be configured to stop visual inspection of the target article and process the target article as a defective article upon the defect tolerance being exceeded (e.g. send a control signal to unload the target article, transport the defective article to a designated area). In cases where the defect tolerance has not been exceeded, the PLC may be configured to ignore the defect and continue visual inspection of the target article.

In other embodiments, some of the defect tolerance storage and processing functions described above as performed by the PLC may be performed by another computing device, such as the computer system 1800 or other computing component communicatively connected to the computer system 1800. For example, the computer system 1800 may store the defect tolerance information in memory 1804 and a software component executed by the processor 1802 may be configured to reference the stored defect tolerance information using the tracked object data to determine whether the defect tolerance is exceeded.

The object tracker 1806 is configured to assign the third tracking status to the tracked object upon confirmation that the tracked object exceeds the object tolerance. The object tracker 1806 may be configured to stop tracking a tracked object that has been assigned the third tracking status (approved confirmed detection). Accordingly, the object tracker 1806 does not consider the approved confirmed detection (e.g. PLC approved) in future frames.

The object tracker 1806 may, in variations, be much faster than the actual object detector to remove overhead, be able to handle when a tracked object disappears or moves outside the boundaries of the image or video frame, be robust to occlusion, and be able to pick up objects that the object tracker has lost in between frames. Optimization of the object tracker may be critical in some embodiments of the visual inspection system, and if the object tracker takes too much time or memory to perform its calculations for tracking, it will take up time will be taken up that is needed by and used for the other Al algorithms (e.g. object detection, classification, golden sample analysis). Robustness to occlusion may be provided by the ability of the object tracker to predict motion of an object using its past motion vectors.

The object tracker 1806 may provide various capabilities and advantages. The object tracker 1806 may track unique objects simultaneously (via class and position). The object tracker 1806 may be more robust with an ability to track objects that miss frames randomly. The object tracker 1806 may provide better precision on defect sizing by using dynamic average sizing over multiple frames. The object tracker 1806 may track motion vectors of each tracked object. The object tracker 1806 may facilitate counting of unique objects. The object tracker 1806 can disregard objects in future frames when such objects have been marked as approved true detections by the object tracker 1806.

Referring now to Figure 20, shown therein is a method 2000 of using the object tracker 1806 of Figure 18 during visual inspection, according to an embodiment. The method 2000 may be performed on each frame seen or acquired by the camera imaging the target article. At 2002, an inspection image of the target article (e.g. a frame of a video taken of the target article) is provided as input to an object detection network. The object detection network includes an object detection model for detecting defects (objects) and a classification model for classifying the detected defects. At 2004, the object detection network detects and classifies defects in the inspection image. At 2006, the object detection network outputs bounding box coordinates and a class label for each detected and classified defect. The bounding box coordinates define a region of interest of the inspection image containing the defect. The class label indicates a type or class of defect. At 2008, the bounding box coordinates and class label for each defect detected and classified by the object detection network are provided as input to the object tracker 1806.

At 2010, the object tracker 1806 updates the tracked object data structure 1808 using the bounding box and class information generated by the object detection network. This may include application of the centroid tracking algorithm by the object tracker 1806 to determine if a given defect is a previously seen (tracked) defect or a newly seen defect (not yet tracked). This determination may include the use of the bounding box coordinates and class label information. If the defect is a newly seen defect, the object tracker 1806 assigns a unique ID 1810 to the defect and tracks the defect across subsequent frames. The object tracker generates a tracked object data structure 1808 for the tracked object that is linked to the object ID 1810. If the defect is a previously seen defect (i.e. tracked), the object tracker 1806 updates the tracked object data structure 1808 corresponding to the unique object ID 1810 of the tracked defect. This may include updating values for any one or more of data types 1814, 1818, 1820, 1822, 1824, 1826, 1828, 1830, 1832 in the tracked object data structure 1808. For example, this may include a calculation of a new average size 1824 (dynamic average sizing) of the defect using size information from the current frame. As another example, this may include updating the tracking status of the tracked defect (e.g. unconfirmed, confirmed, approved confirmed).

In some cases, the method 2000 may be performed for golden sample analysis. In such cases the inspection image is provided to the golden sample component (e.g. golden sample component 316). The golden sample output may include bounding boxes for each detected object (i.e. differences between feature map of inspection image and golden sample image) and no class label information. The object tracker 1806 may then update the tracked object data structure 1804 using the bounding box coordinates.

Reference is now made to Figures 21A to 21D, which illustrate example inspection images that have been processed using an object tracking process, according to an embodiment. For example, the images may be processed using the object tracker 1806 and computer system 1800 of Figure 18. The inspection images are of a camshaft imaged across four frames. The camshaft is being visually inspected according to systems and methods described herein. The visual inspection includes seal ring assembly detection. Seal ring assembly detection includes detecting and confirming seal ring presence and orientation. Seal ring assembly detection is performed for seal rings. A seal ring is a plastic part that is put onto camshafts. Occasionally the machine performing the seal ring placement does not place the seal ring on the camshaft or does so incorrectly. The visual inspection system and object tracker (e.g. system 1800) may be configured to confirm the seal rings are both present and inserted correctly on the camshaft.

Referring now to Figure 21A, shown therein is a user interface 2100a showing a first annotated inspection frame that has been processed using an object tracking process, such as using computer system 1800, according to an embodiment. The visual inspection system is inspecting three regions of interest ("ROI"), ROI 1 2104, ROI 2 2106, and ROI 3 (not shown), and detecting and confirming seal ring presence and orientation for a first seal ring 2110 and a second seal ring 2112. ROI 3 is not in this specific part of the camshaft. The camshafts may have a maximum of three specific ROIs per section. The object tracker 1806 is maintaining a tracked object count 2114 for the three ROIs 2104, 2106, and ROI 3. As can be seen, the tracked object count 2114 includes one tracked object in ROI 2104 (corresponding to first object 2122, described below). The object tracker 1806 is also maintaining a seal ring tracking status (true/false) for the second and first seal rings 2116, 2118. The second seal ring status 2116 is false. The first seal ring status 2118 is also false. The object tracker 1806 is configured to assign an unconfirmed detection tracking status (i.e. not a true detection) to a tracked object that has been seen in less than five frames. An unconfirmed detection may be labelled in the user interface 2100a using a unique colour indicator (e.g. a blue colour indicator). For example, certain information (e.g. defect ID, centroid location, etc.) may be displayed in text near the defect or bounding box for the defect and such text may be coloured or highlighted in a colour.

The object tracker 1806 is configured to assign a true detection tracking status to a tracked object that has been seen across five frames. A true detection may be labelled in the user interface 2100a using a unique colour indicator (e.g. a yellow colour indicator). For example, certain information (e.g. defect ID, centroid location, etc.) may be displayed in text near the defect or bounding box for the defect and such text may be coloured or highlighted in a colour.

The object tracker 1806 is configured to assign an approved true detection status to a tracked object that has been seen across five frames and which has been confirmed as being with an accepted tolerance. An approved true detection may be labelled in the user interface 2100a using a unique colour indicator (e.g. a red colour indicator). For example, certain information (e.g. defect ID, centroid location, etc.) may be displayed in text near the defect or bounding box for the defect and such text may be coloured or highlighted in a colour. As will be understood, unique colour indicators may enable an unconfirmed detection, true detection, and approved true detection to be visually distinguished from one another, such that a user viewing the user interface may understand the status of the detection. Other forms of uniquely identifying and visually distinguishing unconfirmed detections, true detections, and approved true detections may be used and using text having a unique colour indicator is merely an example. For example, in other cases, the status of the detection may be provided in text near the detected defect. Oil and dirt elements 2120 have been ignored.

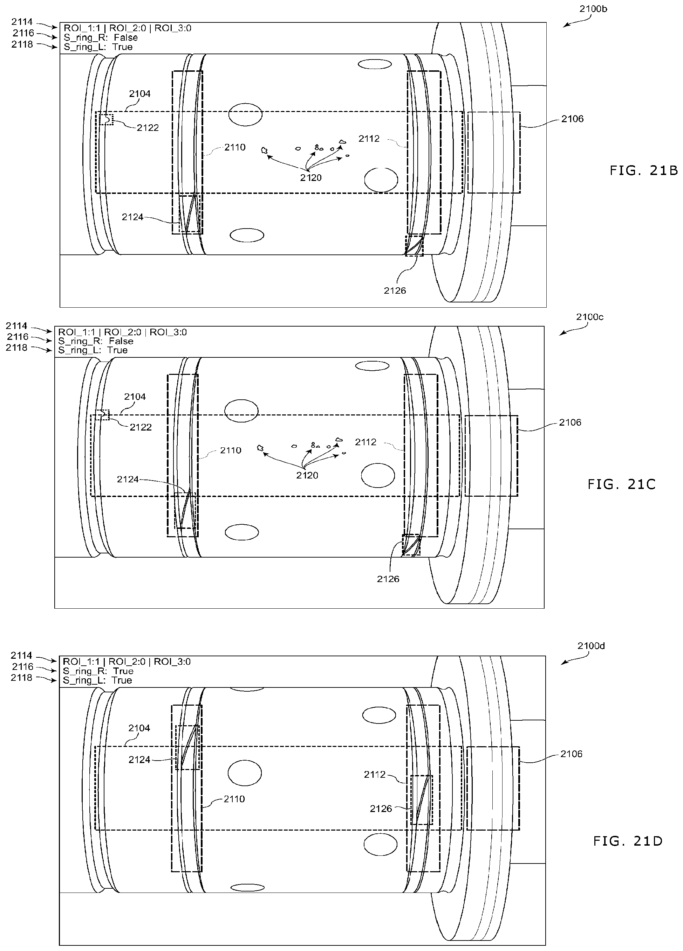

A first object 2122 has been detected in ROI 2104. The first object 2122 has been seen across at least 5 frames and has been confirmed as being with an accepted tolerance, so the object tracker 1806 assigns an approved true detection status to the first object 2122. The first object 2122 is a tracked defect. A second object 2124 (seal ring tracking) has been detected in the first seal ring 2110. The second object 2124 has been seen in fewer than five frames, so the object tracker 1806 assigns an unconfirmed detection tracking status to the second object 2124. A third object 2126 can be seen. The third object 2126 is a second seal ring. Each camshaft has two seal rings. So, if both seal rings are found, the two rectangles may be highlighted (e.g. using a unique colour indicator, for example, green) to show a confirmed presence for both seal rings (shown in FIG 21D).

Referring now to Figure 21B, shown therein is a user interface 2100b showing a second annotated inspection frame that has been processed using an object tracking process, such as using computer system 1800, according to an embodiment. The second inspection frame was acquired after the first inspection frame of Figure 21A. The second object 2124 has now been seen in five frames. The object tracker 1806 assigns a true detection tracking status to the second object 2124. The true detection status for the second object 2124 indicates confirmation of the first seal ring presence and orientation (true detection, not approved). The object tracker 1806 updates the first seal ring status 2118 to "true". The presence and orientation of the first seal ring has yet to be confirmed.

Referring now to Figure 21C, shown therein is a user interface 2100c showing a third annotated inspection frame that has been processed using an object tracking process, such as using computer system 1800, according to an embodiment. The third inspection frame was acquired after the second inspection frame of Figure 21B. The second object 2124 has now been approved. The object tracker 1806 assigns an approved true detection status to the second object 2124. The presence and orientation of the second seal ring 2112 has yet to be confirmed.

Referring now to Figure 21D, shown therein is a user interface 2100d showing a fourth annotated inspection frame that has been processed using an object tracking process, such as using computer system 1800, according to an embodiment. The fourth inspection frame was acquired after the third inspection frame of Figure 21C. User interface 2100d shows the seal ring assembly detection as complete.

The third object 2126 has now been seen in at least five frames. The object tracker 1806 assigns an approved true detection status to the third object 2126. The true detection status for the third object 2126 indicates confirmation of the second seal ring 2112 presence and orientation. The object tracker 1806 has updated the second seal ring status 2116 to "true". This may include highlighting the bounding box for the second seal ring 2112 using a unique colour indicator (e.g. green highlight).

The systems and methods for visual inspection described herein may reduce false positive defect detections using efficient model training and object tracking. Efficient model training may include any one or more of proper model annotation and in-training augmentation, early stopping to avoid overfitting, hyper parameter tuning (LR, optimizers, bounding box proposals), proper image preprocessing, and data pruning. Object tracking requires that unique defects be seen over multiple frames before the object tracker alerts the visual inspection system.

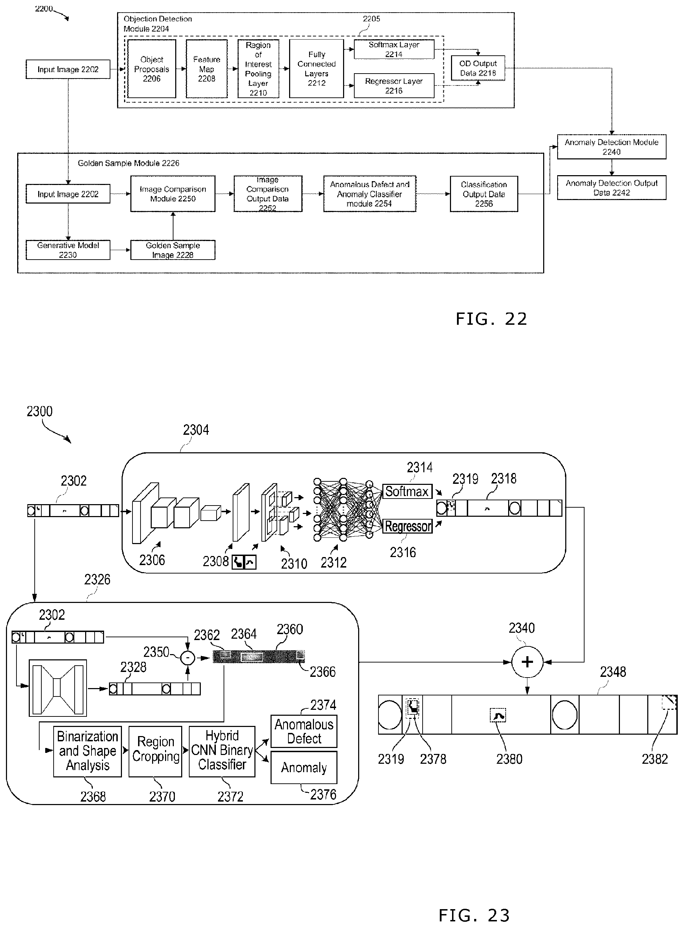

Referring now to Figure 22, shown therein is a visual inspection pipeline 2200, according to an embodiment. The pipeline 2200 is implemented by one or more computing devices, such as the worker node device 310 of Figure 3. The pipeline 2200 performs defect detection and classification and anomaly detection. The pipeline 2200 functions similarly to the pipeline 500 of Figure 5. Components performing the same or similar functions in pipeline 2200 as in pipeline 500 are denoted using the same last two reference numbers (e.g. inspection image 2202, inspection image 502). Certain features and functionalities of such components previously described in reference to Figure 5 are not repeated here but should be understood to be present. The pipeline 2200 starts with an input image 2202. The input image is passed to an object detection module 2204 and a golden sample analysis module 2226.

The object detection module 2204 includes an object detection model 2205. The object detection model 2205 receives the input image 2202 as input and generates object detection ("OD") output data 2218. The OD output data 2218 includes object data describing each object detected in the input image 2202 by the object detection model 2205. The object data for a detected object may include, for example, object identifier data uniquely identifying the object, object class data (e.g. class label), object location data (e.g. bounding box coordinates), object confidence level data, or object size data. The OD output data 2218 may be in the form of an array, a list, or other data structure which includes the object data for each detected object. The OD output data 2218 may be in a format that is readily compared with output data generated by the golden sample module 2226 (described below). The readily comparable format of the OD output data 2218 may be generated directly by the object detection model 2205, may be generated by the object detection module 2204 by converting an output of the object detection model 2205, or may be generated by the anomaly detection module 2240 using the OD output data 2218 (i.e. converting the OD output data into an appropriate format).

In Figure 22, the object detection model 2205 includes an object proposals component 2206, a feature map component 2208, an ROI pooling layer component 2210, a fully connected layers component 2212, a SoftMax layer component 2214, and a regressor layer component 2216. In other embodiments, the object detection model 2205 may be constructed differently provided the object detection model 2205 is a machine learning model trained to detect one or more classes of objects in the input image 2202 and generate object data for a detected object. The OD output data 2218 is provided from the object detection module 2204 to an anomaly detection module 2240. As previously described, the input image 2202 is also provided to the golden sample module 2226. The input image 2202 is provided to an image comparison module 2350. The input image 2202 is also provided to a generative model 2230. The generative model 2230 receives the input image 2202 as input and generates a golden sample image 2228 as output. The golden sample image 2228 is provided to the image comparison module 2350.

The image comparison module 2250, having received the input image 2202 and the golden sample image 2228, performs an image comparison on the input image 2202 and the golden sample image 2228 to generate image comparison output data 2252 identifying differences. Differences generally correspond to artifacts present in the input image 2202 but not in the golden sample image 2228. The detected artifacts may be considered "objects" or "regions of interest". The detected artifacts are defined in the image comparison output data by artifact data. The artifact data may include location data identifying a location of the artifact in the input image. The artifact data may also include an artifact identifier linked to the artifact location data. The location data may include bounding box coordinates defining a bounding box the encloses the artifact. The image comparison output data 2252 is provided to an anomalous defect and anomaly classifier module 2254.

The anomalous defect and anomaly classifier module 2254 may include an artifact cropping module. The artifact cropping module is configured to receive the image comparison output data 2252 and use the artifact location data to extract a subset or portion of the input image 2202 which includes the detected artifact. This may be performed for each detected artifact. For example, the cropping module may be configured to crop or extract the subset of the input image data 2202 that is defined by the bounding box coordinates. A subset of the input image data 2202 corresponding to a detected artifact may be referred to as a "cropped artifact image". In other embodiments, the cropping module may be a component of the image comparison module 2250 or a standalone module between the image comparison module 2250 and the anomalous defect and anomaly classifier module 2254. The anomalous defect and anomaly classifier module 2254 includes an anomalous defect and anomaly classifier model. The classifier model is trained to perform an image classification task. The classifier model may be a binary classification model configured to receive an input image and assign an anomalous defect label or an anomaly label to the input image.

The anomalous defect and anomaly classifier model receives the image comparison output data 2252 (or the cropped artifact image(s), where generated) as input and generates classification output data 2256. The classification output data 2256 includes the determined class label. The determined class label may linked to the artifact identifier assigned to the classified artifact (and thus also to the location data for the artifact). The classification output data 2256 may also include the artifact identifier and artifact location data for classified artifact. In some cases, the classification output data 2256 may include classification output data for a plurality of detected artifacts (e.g. for each artifact from the input image 2202 that has been detected and classified by the golden sample module 2226).

The classification output data 2256 is provided from the golden sample module 2226 to the anomaly detection module 2240. The anomaly detection module 2240 receives the OD output data 2218 and the classification output data 2256. The OD output data 2218 and the classification output data 2256 may each include or be otherwise linked to or associated with input image identifier data which identifies the input image 2202 from which the OD output data 2218 and classification output data 2256 was derived. The anomaly detection module 2240 may use such input image identifier to know to compare OD output data 2218 and classification output data 2256 corresponding to the same input image 2202.

The anomaly detection module 2240 is configured to compare the OD output data 2218 to the classification output data 2256 to determine whether an object (defect) detected by the object detection module 2204 corresponds to an anomalous defect determined by the golden sample module 2226. This may include the anomaly detection module 2240 determining whether the location data of the object detection defect and the location data of the anomalous defect meet a predetermined condition. For example, the predetermined condition may be that the bounding box coordinates of the anomalous defect lie partially or wholly within the bounding box coordinates of the object detection defect (or vice versa). Generally, the predetermined condition is a correlation of the location data of the object detection defect and the anomalous defect such that it can be inferred that they are locating the same "item". Where the predetermined condition is met, the anomaly detection module 2240 may generate and assign a "confirmed defect" status or label to the defect. The system may then store the confirmed defect as a "confirmed defect". In some cases, when annotating an input image, a defect that has been confirmed may be visually labelled as "confirmed". Further, determination of a confirmed defect status may initiate a downstream process such stopping further inspection of an article (such as by generating a signal and transmitting the signal from node device 310 to PLC 328)

Where the anomaly detection module 2240 determines that an anomalous defect does not correspond to an object detection defect, the anomalous defect label may be maintained. The anomalous defect label data may be used by a downstream process of the system, such as to identify the input image containing the anomalous defect as a training sample to further train the object detector model 2205 to detect the anomalous defect or to trigger a user interface presentation (such as including an annotated image) requesting confirmation of the defect by a user.

The anomaly detection module 2240 generates anomaly detection output data 2242. The anomaly detection output data 2242 may be an annotated input image. The annotated image may include the input image with one or more bounding boxes overlayed the input image which enclose objects detected by the object detection module 2204 and artifacts detected by the golden sample module 2226. Each bounding box may include a label associated therewith which indicates whether the enclosed item is an object detection defect, an anomalous defect, a confirmed defect, or an anomaly. In other cases, the anomaly detection output data 2242 may include a data structure storing the data defining the detected objects and artifacts (e.g. class label, location data, identifier data, input image identifier data, size data, confidence level data, confirmed status, etc.). The data structure may be used to generate an annotated input image, such as by retrieving the data structure and the input image 2202 and using an image annotation module to generate (and display) the annotated input image. The data structure (or a subset of the data contained therein) may be used for analytics purposes, such as by providing the data structure to the server node 334 for storage in the analytics database 342.

Referring now to Figure 23, shown therein is an automated visual inspection pipeline 2300, for camshaft visual inspection, according to an embodiment. The automated visual inspection pipeline 2300 is similar to the automated visual inspection pipeline 2200 described in Figure 22, and to the anomaly detection pipelines 500, 1500, and 1600. To avoid repetition, similarities are not discussed. Accordingly, other than below-discussed differences, everything said heretofore about pipelines 500, 1500, 1600, and in particular pipeline 2200, may apply to pipeline 2300 as well. In Figure 23, elements and components with similar functions to elements and components of pipeline 2200 (and pipelines 500, 1500, and 1600) are denoted with reference numbers having the same last two digits.

The pipeline 2300 starts with inspection image 2302. The inspection image 2302 is of a camshaft. In variations, the inspection image 2302 may be of another article or any suitable input image. The inspection image 2302 is provided to an object detection module 2304. The object detection module 2304 includes an object detection model including an object proposals component 2306, a feature map component 2308, an ROI pooling component 2310, a fully connected layers component 2312, a softmax component 2314, and a regressor component 2316. The object detection module 2304 generates OD output data 2318. The OD output data 2318 includes a detected defect 2319 (object detection defect 2319). Defected defect 2319 is defined by object data including a bounding box (location data) enclosing the object. The OD output data 2318 is provided from the object detection module 2304 to an anomaly detection module 2340. The inspection image 2302 is also provided to a golden sample module 2326. The inspection image 2302 is provided to a generative model 2330. The generative model 2330 generates a generative golden sample image 2328. The inspection image 2302 and the generative golden sample image 2328 are provided to an image comparison module 2350 configured to perform a direct image comparison and generate image comparison output data 2360.

In an embodiment, the direct image comparison is performed using matrix subtraction or pixel to pixel greyscale subtraction. The input and output are the same dimensions (same as actual input image (e.g. 512*512 from autoencoder scaled back to 300*1000)) and only one value per pixel is subtracted. This is in contrast to a feature map approach, such as may be performed in feature map analysis 536 of Figure 5, where a down-sampled version of the image (e.g. 7*7) is used and each pixel contains a vector that is compared to a vector of a similar size pertaining to the same pixel from the feature map of the input image.

The image comparison output data 2360 includes artifacts 2362, 2364, and 2366 that have been identified by the image comparison process. In an embodiment, the image comparison output data 2360 is a greyscale image (e.g. 300*1000) containing differences between the inspection image 2302 and the generative golden sample image 2328. As previously described, the differences generally correspond to "artifacts" (i.e. differences) present inspection image 2302 and not in the golden sample image 2328.

Each artifact 2362, 2364, 2366 has artifact data associated therewith describing the artifact and which includes bounding box coordinates defining a bounding box enclosing the artifact (shown in Figure 23). The image comparison output data 2360 is provided to a binarization and shape analysis module 2368. The binarization and shape analysis module 2368 performs binarization on the image comparison output data 2360. The binarization includes creating a black-white image using a static threshold. The binarization and shape analysis module 2368 also performs a shape analysis on the image comparison output data 2360. The shape analysis includes a combination of morphological operations.

The output of the binarization and shape analysis module 2368 is provided to a region cropping module 2370. The region cropping module 2370 is configured to cut extract (e.g. by cutting bounding boxes) a subset of the image data (i.e. a smaller image) from the image for use in downstream analysis units. The region cropping module 2370 may be provided and use artifact location data (e.g. bounding box coordinates) to crop the smaller image.

The output of the region cropping module 2370 may be a set of small images. In an embodiment, the output may be a batch of 224*224 images. The output of the region cropping module 2370 is provided to a classifier model 2372, such as a neural network (e.g. CNN). In the embodiment of Figure 23, the classifier model 2372 is a hybrid CNN binary classifier. In another embodiment, the classifier model 2372 may be a fine-tuned CNN. The hybrid CNN binary classifier may be a combination of convolution layers (from a pre-trained CNN) and a support vector machine ("SVM") classifier. The SVM classifier may be trained on a small set of project-specific images. With sufficient training samples, the hybrid CNN may be swapped with a fine-tuned CNN. The classifier model 2372 is configured to receive image data as input (region cropped image) and classify the image as an anomalous defect 2374 or an anomaly 2376. The classification is stored as a class label of the artifact.

In Figure 23, the classifier 2372 has classified artifact 2362 as an anomalous defect, artifact 2364 as an anomalous defect, and artifact 2366 as an anomaly (as shown in output image 2348, described below). The binarization and shape analysis module 2368, the region cropping module 2370, and the classifier model 2372 may be components of an anomalous defect and anomaly classifier module, such as anomalous defect and anomaly classifier module 2254 of Figure 22. The classification data 2374, 2376 is a component of classification output data (e.g. output data 2256) that is provided to the anomaly detection module 2340.

The anomaly detection module 2340 receives the OD output data 2318 from the object detection module 2304 and the classification output data including the classifications 2374, 2376 from the golden sample module 2326. The anomaly detection module 2340 generates an annotated output image 2348 which includes the input image 2302 and a plurality of bounding boxes and associated labels overlayed the input image 2302. In particular, the annotated output image includes object detection defect 2319, anomalous defect 2378 (corresponding to artifact 2362), anomalous defect 2380 (corresponding to artifact 2364 classified as an anomalous defect 2374), and anomaly 2382 (corresponding to artifact 2366 classified as an anomaly 2376). In some embodiments, the anomaly detection module 2340 may be configured to determine that the object detection defect 2319 and the anomalous defect 2378 correspond to the same defect (such as by comparison of bounding box coordinates or other location data) and may then generate a single bounding box for the defect (which may correspond to the object detection defect bounding box or the anomalous defect bounding box, or a newly defined bounding box derived from both) and assign a "confirmed defect" label to the defect.

While the above description provides examples of one or more apparatus, methods, or systems, it will be appreciated that other apparatus, methods, or systems may be within the scope of the claims as interpreted by one of skill in the art.

## Claims

1. A method of automated visual inspection of an article in an object detection model to generate object location data, wherein an inspection image (502, 100, 1202, 1308, 1310, 1312, 1502, 1542, 22202, 2302) is provided as input to a first convolutional neural network**,** CNN, (1014) and to generate an inspection image feature map using the first CNN; the method comprising:
providing a golden sample image (228, 238, 528, 1006, 1204, 1302, 1304, 1306, 1402a, 1404a, 1528, 2228, 2238) of the article as input to a second CNN (1014) and generating a golden sample feature map using the second CNN;
comparing the inspection image to a golden sample image to identify an artifact in the inspection image corresponding to a difference between the inspection image and the golden sample image, wherein the artifact is defined by artifact location data describing a location of the artifact in the inspection image;
**characterized in that** the method further comprises
determining whether the artifact location data matches the object location data according to predetermined match criteria;
receiving input data from the user indicating the detected artifact is an anomalous defect and tagging the inspection image as an object detection training sample; and
initiating a retraining of the object detection model using the object detection training sample.

2. The method of claim 1, further comprising confirming the detected object as a defect if the artifact location data matches the object location data.

3. The method of claim 1, further comprising displaying the detected artifact via a user interface (2100a, b, c, d) if the artifact location data does not match the object location data, wherein the user interface is configured to receive input data from a user indicating whether the detected artifact is an anomalous defect (2380) or an anomaly (2382).

4. The method of claim 1, wherein comparing the inspection image to the golden sample image includes comparing an inspection image feature map of the inspection image to a golden sample feature map of the golden sample image.

5. The method of claim 4, further comprising generating the inspection image feature map using the first convolutional neural network ("CNN") (1014) and generating the golden sample image feature map using a second CNN (1014).

6. The method of claim 1, further comprising generating a first defect class label for the detected object using the object detection model, providing at least a portion on the inspection image containing the detected object as input to a classification model (522, 802, 822, 850, 1622), generating a second defect class label for the detected object using the classification model, and confirming the first defect class label if the first defect class label matches the second defect class label.

7. A computer system for automated visual inspection of an article, the system comprising:
an input interface for receiving an inspection image of the article in an object detection model to generate object location data, at least one processor (102, 1802), and a memory in communication with the processor, the at least one processor configured to:
provide an inspection image as input to a first convolutional neural network, CNN, and generate an inspection image feature map using the first CNN;
compare the inspection image to a golden sample image to identify an artifact in the inspection image corresponding to a difference between the inspection image and the golden sample image, wherein the artifact is defined by artifact location data describing a location of the artifact in the inspection image;
**characterized in that** the processor is further configured to
determine whether the artifact location data matches the object location data according to predetermined match criteria;
receive input data from the user indicating the detected artifact is an anomalous defect and tag the inspection image as an object detection training sample; and
initiate a retraining of the object detection model using the object detection training sample.

8. The system of claim 7, wherein the at least one processor (102, 1802) is further configured to confirm the detected object as a defect if the artifact location data matches the object location data.

9. The system of claim 7, wherein the at least one processor (102, 1802) is further configured to display the detected artifact via a user interface (2100a, b, c, d) if the artifact location data does not match the object location data, wherein the user interface is configured to receive input data from a user indicating whether the detected artifact is an anomalous defect (2380) or an anomaly (2382).

10. The system of claim 7, wherein the golden sample image is a reference image representing a clean image of the article, and wherein the at least one processor (102, 1802) is further configured to generate the golden sample image from the inspection image using a generative machine learning model.

11. The system of claim 7, wherein the at least one processor (102, 1802) is further configured to generate a first defect class label for the detected object using the object detection model, provide at least a portion on the inspection image containing the detected object as input to a classification model, generate a second defect class label for the detected object using the classification model, and confirm the first defect class label if the first defect class label matches the second defect class label.

## Patentansprüche

1. Verfahren zur automatisierten visuellen Inspektion eines Artikels in einem Objekterkennungsmodell zum Erzeugen von Objektpositionsdaten, wobei ein Inspektionsbild (502, 100, 1202, 1308, 1310, 1312, 1502, 1542, 2202, 2302) als Eingabe einem ersten faltenden neuronalen Netzwerk, CNN, (1014) zugeführt wird und unter Verwendung des ersten CNN eine Inspektionsbild-Merkmalskarte erzeugt wird;
das Verfahren umfassend:
Bereitstellen eines fehlerfreien Referenzbildes (228, 238, 528, 1006, 1204, 1302, 1304, 1306, 1402a, 1404a, 1528, 2228, 2238) des Artikels als Eingabe an ein zweites CNN (1014) und Erzeugen einer Merkmalskarte zu dem fehlerfreien Referenzbild unter Verwendung des zweiten CNN;
Vergleichen des Inspektionsbildes mit einem fehlerfreien Referenzbild, um einen Fehler im Inspektionsbild zu identifizieren, der einer Differenz zwischen dem Inspektionsbild und dem fehlerfreien Referenzbild entspricht, wobei der Fehler durch Fehlerpositionsdaten definiert ist, die eine Position des Fehlers im Inspektionsbild beschreiben;
**dadurch gekennzeichnet, dass** das Verfahren ferner das Bestimmen umfasst, ob die Fehlerpositionsdaten gemäß vorbestimmten Übereinstimmungskriterien mit den Objektpositionsdaten übereinstimmen;
Empfangen von Eingabedaten von dem Nutzer, die angeben, dass es sich bei dem erkannten Fehler um einen anomalen Fehler handelt, und Kennzeichnen des Inspektionsbildes als Trainingsbeispiel für die Objekterkennung; und
Einleiten eines erneuten Trainings des Objekterkennungsmodells unter Verwendung des Trainingsbeispiels für die Objekterkennung.

2. Verfahren nach Anspruch 1, ferner umfassend das Bestätigen des erkannten Objekts als Fehler, wenn die Fehlerpositionsdaten mit den Objektpositionsdaten übereinstimmen.

3. Verfahren nach Anspruch 1, ferner umfassend das Anzeigen des erkannten Fehlers über eine Benutzerschnittstelle (2100a, b, c, d), wenn die Fehlerpositionsdaten nicht mit den Objektpositionsdaten übereinstimmen, wobei die Benutzerschnittstelle so konfiguriert ist, dass sie Eingabedaten von einem Nutzer empfängt, die angeben, ob es sich bei dem erkannten Fehler um einen anomalen Fehler (2380) oder eine Anomalie (2382) handelt.

4. Verfahren nach Anspruch 1, wobei das Vergleichen des Inspektionsbildes mit dem fehlerfreien Referenzbild das Vergleichen einer Inspektionsbild-Merkmalskarte des Inspektionsbildes mit einer Referenzbild-Merkmalskarte des fehlerfreien Referenzbildes umfasst.

5. Verfahren nach Anspruch 4, ferner umfassend das Erzeugen der Inspektionsbild-Merkmalskarte unter Verwendung des ersten faltenden neuronalen Netzwerks ("CNN") (1014) und das Erzeugen der Referenzbild-Merkmalskarte unter Verwendung eines zweiten CNN (1014).

6. Verfahren nach Anspruch 1, ferner umfassend das Erzeugen einer ersten Fehlerklassenbezeichnung für das erkannte Objekt unter Verwendung des Objekterkennungsmodells, das Zuführen mindestens eines Teils des Inspektionsbildes, der das erkannte Objekt enthält, als Eingabe an ein Klassifizierungsmodell (522, 802, 822, 850, 1622), das Erzeugen einer zweiten Fehlerklassenbezeichnung für das erkannte Objekt unter Verwendung des Klassifizierungsmodells und das Bestätigen der ersten Fehlerklassenbezeichnung, wenn die erste Fehlerklassenbezeichnung mit der zweiten Fehlerklassenbezeichnung übereinstimmt.

7. Computersystem zur automatisierten visuellen Inspektion eines Artikels, das System umfassend:
eine Eingabeschnittstelle zum Empfangen eines Inspektionsbildes des Artikels in einem Objekterkennungsmodell zum Erzeugen von Objektpositionsdaten, mindestens einen Prozessor (102, 1802) und einen mit dem Prozessor kommunizierenden Speicher, wobei der mindestens eine Prozessor konfiguriert ist für:
Bereitstellen eines Inspektionsbildes als Eingabe an ein erstes faltendes neuronales Netzwerk (CNN) und Erzeugen einer Inspektionsbild-Merkmalskarte unter Verwendung des ersten CNN;
Vergleichen des Inspektionsbildes mit einem fehlerfreien Referenzbild, um einen Fehler im Inspektionsbild zu identifizieren, der einer Differenz zwischen dem Inspektionsbild und dem fehlerfreien Referenzbild entspricht, wobei der Fehler durch Fehlerpositionsdaten definiert ist, die eine Position des Fehlers im Inspektionsbild beschreiben;
**dadurch gekennzeichnet, dass** der Prozessor ferner konfiguriert ist, zu bestimmen, ob die Fehlerpositionsdaten gemäß vorbestimmten Übereinstimmungskriterien mit den Objektpositionsdaten übereinstimmen;
Empfangen von Eingabedaten von dem Nutzer, die angeben, dass es sich bei dem erkannten Fehler um einen anomalen Fehler handelt, und Kennzeichnen des Inspektionsbildes als Trainingsbeispiel für die Objekterkennung; und
Einleiten eines erneuten Trainings des Objekterkennungsmodells unter Verwendung des Trainingsbeispiels für die Objekterkennung.

8. System nach Anspruch 7, wobei der mindestens eine Prozessor (102, 1802) ferner so konfiguriert ist, dass er das erkannte Objekt als Fehler bestätigt, wenn die Fehlerpositionsdaten mit den Objektpositionsdaten übereinstimmen.

9. System nach Anspruch 7, wobei der mindestens eine Prozessor (102, 1802) ferner so konfiguriert ist, dass er den erkannten Fehler über eine Benutzerschnittstelle (2100a, b, c, d) anzeigt, wenn die Fehlerpositionsdaten nicht mit den Objektpositionsdaten übereinstimmen, wobei die Benutzerschnittstelle so konfiguriert ist, dass sie Eingabedaten von einem Nutzer empfängt, die angeben, ob es sich bei dem erkannten Fehler um einen anomalen Fehler (2380) oder eine Anomalie (2382) handelt.

10. System nach Anspruch 7, wobei das fehlerfreie Referenzbild ein Referenzbild ist, das ein fehlerfreies Bild des Artikels darstellt, und wobei der mindestens eine Prozessor (102, 1802) ferner so konfiguriert ist, dass er das fehlerfreie Referenzbild aus dem Inspektionsbild unter Verwendung eines generativen maschinellen Lernmodells erzeugt.

11. System nach Anspruch 7, wobei der mindestens eine Prozessor (1, 1802) ferner konfiguriert ist, eine erste Fehlerklassenbezeichnung für das erkannte Objekt unter Verwendung des Objekterkennungsmodells zu erzeugen, mindestens einen Teil des Inspektionsbildes bereitzustellen, der das erkannte Objekt enthält, als Eingabe an ein Klassifizierungsmodell, eine zweite Fehlerklassenbezeichnung für das erkannte Objekt unter Verwendung des Klassifizierungsmodells erzeugt und die erste Fehlerklassenbezeichnung bestätigt, wenn die erste Fehlerklassenbezeichnung mit der zweiten Fehlerklassenbezeichnung übereinstimmt.

## Revendications

1. Procédé d'inspection visuelle automatisée d'un article dans un modèle de détection d'objet afin de générer des données d'emplacement d'objet, dans lequel une image d'inspection (502, 100, 1202, 1308, 1310, 1312, 1502, 1542, 2202, 2302) est fournie en tant qu'entrée à un premier réseau neuronal convolutif, CNN, (1014) et afin de générer une carte de caractéristiques d'image d'inspection à l'aide du premier CNN ;
le procédé comprenant :
la fourniture d'une image échantillon de référence (228, 238, 528, 1006, 1204, 1302, 1304, 1306, 1402a, 1404a, 1528, 2228, 2238) de l'article en tant qu'entrée dans un second CNN (1014) et la génération d'une carte de caractéristiques d'échantillon de référence à l'aide du second CNN ;
la comparaison de l'image d'inspection à une image d'échantillon de référence pour identifier un artefact dans l'image d'inspection correspondant à une différence entre l'image d'inspection et l'image d'échantillon de référence, dans lequel l'artefact est défini par des données d'emplacement d'artefact décrivant un emplacement de l'artefact dans l'image d'inspection ;
**caractérisé en ce que** le procédé comprend en outre la détermination si les données d'emplacement d'artefact correspondent aux données d'emplacement d'objet selon des critères de correspondance prédéfinis ;
la réception des données d'entrée provenant de l'utilisateur indiquant que l'artefact détecté est un défaut anormal et le marquage de l'image d'inspection en tant qu'échantillon d'apprentissage à la détection d'objet ; et
le lancement d'un réapprentissage du modèle de détection d'objet à l'aide de l'échantillon d'apprentissage à la détection d'objet.

2. Procédé selon la revendication 1, comprenant en outre la confirmation de l'objet détecté comme étant un défaut si les données d'emplacement d'artefact correspondent aux données d'emplacement d'objet.

3. Procédé selon la revendication 1, comprenant en outre l'affichage de l'artefact détecté par l'intermédiaire d'une interface utilisateur (2100a, b, c, d) si les données d'emplacement d'artefact ne correspondent pas aux données d'emplacement d'objet, dans lequel l'interface utilisateur est conçue pour recevoir des données d'entrée d'un utilisateur indiquant si l'artefact détecté est un défaut anormal (2380) ou une anomalie (2382).

4. Procédé selon la revendication 1, dans lequel la comparaison de l'image d'inspection à l'image d'échantillon de référence comporte la comparaison d'une carte de caractéristiques d'image d'inspection de l'image d'inspection à une carte de caractéristiques d'échantillon de référence de l'image d'échantillon de référence.

5. Procédé selon la revendication 4, comprenant en outre la génération de la carte de caractéristiques d'image d'inspection à l'aide du premier réseau neuronal convolutif (« CNN ») (1014) et la génération de la carte de caractéristiques d'image d'échantillon de référence à l'aide d'un second CNN (1014).

6. Procédé selon la revendication 1, comprenant en outre la génération d'une première étiquette de classe de défaut pour l'objet détecté à l'aide du modèle de détection d'objet, la fourniture d'au moins une partie sur l'image d'inspection contenant l'objet détecté en tant qu'entrée dans un modèle de classification (522, 802, 822, 850, 1622), la génération d'une seconde étiquette de classe de défaut pour l'objet détecté à l'aide du modèle de classification, et la confirmation de la première étiquette de classe de défaut si la première étiquette de classe de défaut correspond à la seconde étiquette de classe de défaut.

7. Système informatique destiné à l'inspection visuelle automatisée d'un article, le système comprenant :
une interface d'entrée destinée à recevoir une image d'inspection de l'article dans un modèle de détection d'objet afin de générer des données d'emplacement d'objet, au moins un processeur (102, 1802) et une mémoire en communication avec le processeur, ledit au moins un processeur étant conçu pour :
fournir une image d'inspection en tant qu'entrée à un premier réseau neuronal convolutif, CNN, et générer une carte de caractéristiques d'image d'inspection à l'aide du premier CNN ;
comparer l'image d'inspection à une image d'échantillon de référence pour identifier un artefact dans l'image d'inspection correspondant à une différence entre l'image d'inspection et l'image d'échantillon de référence, dans lequel l'artefact est défini par des données d'emplacement d'artefact décrivant un emplacement de l'artefact dans l'image d'inspection ;
**caractérisé en ce que** le processeur est conçu en outre pour déterminer si les données d'emplacement d'artefact correspondent aux données d'emplacement d'objet selon des critères de correspondance prédéfinis ;
recevoir des données d'entrée provenant de l'utilisateur indiquant que l'artefact détecté est un défaut anormal et marquer l'image d'inspection en tant qu'échantillon d'apprentissage à la détection d'objet ; et
lancer un réapprentissage du modèle de détection d'objet à l'aide de l'échantillon d'apprentissage à la détection d'objet.

8. Système selon la revendication 7, dans lequel ledit au moins un processeur (102, 1802) est conçu en outre pour confirmer l'objet détecté comme un défaut si les données d'emplacement d'artefact correspondent aux données d'emplacement d'objet.

9. Système selon la revendication 7, dans lequel ledit au moins un processeur (102, 1802) est conçu en outre pour afficher l'artefact détecté par l'intermédiaire d'une interface utilisateur (2100a, b, c, d) si les données d'emplacement d'artefact ne correspondent pas aux données d'emplacement d'objet, dans lequel l'interface utilisateur est conçue pour recevoir des données d'entrée d'un utilisateur indiquant si l'artefact détecté est un défaut anormal (2380) ou une anomalie (2382).

10. Système selon la revendication 7, dans lequel l'image d'échantillon de référence est une image de référence représentant une image propre de l'article, et dans lequel ledit au moins un processeur (102, 1802) est conçu en outre pour générer l'image d'échantillon de référence à partir de l'image d'inspection à l'aide d'un modèle d'apprentissage automatique génératif.

11. Procédé selon la revendication 7, dans lequel ledit au moins un processeur est (102, 1802) est conçu en outre pour générer une première étiquette de classe de défaut pour l'objet détecté à l'aide du modèle de détection d'objet, fournir au moins une partie sur l'image d'inspection contenant l'objet détecté en tant qu'entrée dans un modèle de classification, générer une seconde étiquette de classe de défaut pour l'objet détecté à l'aide du modèle de classification, et confirmer la première étiquette de classe de défaut si la première étiquette de classe de défaut correspond à la seconde étiquette de classe de défaut.
